# EUROPEAN PATENT APPLICATION

(11) **EP 4 850 904 A1**
(43) Date of publication of application: **09.12.2026**
(21) Application number: 25748697.7
(22) Date of filing: 30.01.2025
(51) Int. Cl.: B32B 23/08, B32B 5/28, B32B 7/12, B32B 23/22, B32B 27/36

(54) **MICROFIBRILLATED CELLULOSE-CONTAINING SHEET, LAMINATED SHEET, AND LAMINATE**

(30) Priority: 31.01.2024 JP 2024013439
(71) Applicant: Oji Holdings Corporation, Chuo-ku Tokyo 104-0061 (JP)
(72) Inventor: KOGA, Taiga, Tokyo 104-0061 (JP); SAI, Takafumi, Tokyo 104-0061 (JP); FUSHIMI, Hayato, Tokyo 104-0061 (JP)
(74) Representative: Godemeyer Blum Lenze Patentanwälte Partnerschaft mbB - werkpatent
(86) International application number: PCT/JP2025/002886
(87) International publication number: WO 2025/164694

(57) **Abstract**

An objective of the present invention is to provide a laminate with excellent strength of the laminate as a whole and excellent adhesive strength between layers. A further objective of the present invention is to provide a fine fibrous cellulose-containing sheet and a laminated sheet to be used in the laminate.

A fine fibrous cellulose-containing sheet according to the present embodiment has: a fine fibrous cellulose-containing layer (1A) containing fine fibrous cellulose with a fiber width of 1,000 nm or less and a hydrophilic polymer (1A); and a fine fibrous cellulose-containing layer (1B) containing fine fibrous cellulose with a fiber width of 1,000 nm or less and a hydrophilic polymer (1B), wherein the hydrophilic polymer (1A) and the hydrophilic polymer (1B) have hydroxyl groups, and provided that OHV_1A (mg KOH/g) is the hydroxyl value of the hydrophilic polymer (1A) and OHV_1B (mg KOH/g) is the hydroxyl value of the hydrophilic polymer (1B), the following expression (I) is satisfied. (I): $OHV_ 1 A < OHV_ 1 B$

## Description

### Technical Field

The present invention relates to a fine fibrous cellulose-containing sheet, a laminated sheet, and a laminate.

### Background Art

In recent years, materials using renewable natural fibers have attracted attention due to increased awareness of alternatives to petroleum resources and environmental consciousness. Among natural fibers, fibrous cellulose having a fiber width of 10 µm or more and 50 µm or less, particularly wood-derived fibrous cellulose (pulp) has been widely used mainly as paper products so far.

As the fibrous cellulose, fine fibrous cellulose having a fiber width of 1,000 nm or less is also known. Furthermore, a sheet made of such fine fibrous cellulose, and a composite sheet and a molded article containing fine fibrous cellulose and resin have been developed. In a sheet and a molded article containing fine fibrous cellulose, it is known that the tensile strength and the like are greatly improved because the number of contact points between fibers is significantly increased.

Patent Literature 1 discloses a polycarbonate resin/cellulose fiber laminate in which in a laminate including a polycarbonate resin layer and a cellulose fiber layer, the thickness of the polycarbonate resin layer is 1.4 times or more the thickness of the cellulose fiber layer, for the purpose of providing a composite exhibiting a good balance of characteristics such as high transparency, high elasticity, low linear expansion coefficient, and impact resistance, as well as exhibiting excellent productivity by forming a laminate of a polycarbonate resin layer and a cellulose fiber layer.

### Citation List

### Patent Literature

Patent Literature 1: JP 4985573 B2

### Summary of Invention

### Technical Problem

Since the fine fibrous cellulose-containing sheet has excellent mechanical strength such as tensile strength as well as excellent transparency, the fine fibrous cellulose-containing sheet can be used as a laminate combined with a resin plate, a resin film, or the like as an optical member for various display devices, various solar cells, and the like, and a window material of various vehicles and buildings. In order to further improve the quality of the product when the fine fibrous cellulose-containing sheet is used for such applications, it is desired to improve the adhesive strength between layers of the laminate as compared with the conventional case.

Therefore, an object of the present invention is to provide a laminate having excellent strength as a whole and excellent adhesive strength between layers. Another object of the present invention is to provide a fine fibrous cellulose-containing sheet and a laminated sheet to be used in the laminate.

### Solution to Problem

The present inventors have found that in a fine fibrous cellulose-containing sheet having a fine fibrous cellulose-containing layer 1A containing a fine fibrous cellulose having a fiber width of 1,000 nm or less and a hydrophilic polymer 1A and a fine fibrous cellulose-containing layer 1B containing a fine fibrous cellulose having a fiber width of 1,000 nm or less and a hydrophilic polymer 1B, the hydrophilic polymers 1A and 1B have a hydroxyl group, and the hydroxyl value of the hydrophilic polymer 1A and the hydroxyl value of the hydrophilic polymer 1B have a specific relationship, whereby the above problem is solved.

That is, the present invention relates to the following <1> to <22>.
<1> A fine fibrous cellulose-containing sheet including: a fine fibrous cellulose-containing layer 1A containing a fine fibrous cellulose having a fiber width of 1,000 nm or less and a hydrophilic polymer 1A; and a fine fibrous cellulose-containing layer 1B containing a fine fibrous cellulose having a fiber width of 1,000 nm or less and a hydrophilic polymer 1B, wherein the hydrophilic polymer 1A and the hydrophilic polymer 1B have a hydroxyl group, and provided that a hydroxyl value of the hydrophilic polymer 1A is defined as OHV_1A (mgKOH/g) and a hydroxyl value of the hydrophilic polymer 1B is defined as OHV_1B (mgKOH/g), the following expression (I) is satisfied: $OHV_ 1 A < OHV_ 1 B$ (I).
<2> The fine fibrous cellulose-containing sheet according to <1>, wherein the hydrophilic polymer 1A is a nonionic water-soluble cellulose ether.
<3> The fine fibrous cellulose-containing sheet according to <2>, wherein the hydrophilic polymer 1A has at least one functional group selected from the group consisting of an alkoxy group and a hydroxyalkoxy group.
<4> The fine fibrous cellulose-containing sheet according to any one of <1> to <3>, wherein the hydrophilic polymer 1B is polyvinyl alcohol having a degree of saponification of 80 or more or a modified product thereof.
<5> The fine fibrous cellulose-containing sheet according to any one of <1> to <4>, wherein the following expression (II) is satisfied: $1200 mgKOH / g \geq OHV_ 1 B - OHV_ 1 A \geq 450 mgKOH / g$ (II).
<6> The fine fibrous cellulose-containing sheet according to any one of <1> to <5>, wherein the fine fibrous cellulose has an anionic group.
<7> The fine fibrous cellulose-containing sheet according to <6>, wherein the anionic group of the fine fibrous cellulose is a phosphorus oxoacid group or a functional group derived from a phosphorus oxoacid group.
<8> The fine fibrous cellulose-containing sheet according to <6> or <7>, wherein a content of the anionic group in the fine fibrous cellulose is less than 0.5 mmol/g.
<9> The fine fibrous cellulose-containing sheet according to any one of <1> to <8>, wherein a ratio of a thickness of the fine fibrous cellulose-containing layer 1A to a thickness of the fine fibrous cellulose-containing layer 1B (fine fibrous cellulose-containing layer 1A : fine fibrous cellulose-containing layer 1B) is more than 5.0 : 5.0 and 9.0 : 1.0 or less.
<10> The fine fibrous cellulose-containing sheet according to any one of <1> to <9>, wherein a total thickness of the fine fibrous cellulose-containing layer 1A and the fine fibrous cellulose-containing layer 1B is 20 µm or more and 300 µm or less.
<11> A laminated sheet including: the fine fibrous cellulose-containing sheet according to any one of <1> to <10>;
   an adhesive layer 1A on a surface of the fine fibrous cellulose-containing layer 1A of the fine fibrous cellulose-containing sheet opposite to a surface having the fine fibrous cellulose-containing layer 1B; and an adhesive layer 1B on a surface of the fine fibrous cellulose-containing layer 1B opposite to a surface having the fine fibrous cellulose-containing layer 1A.
<12> The laminated sheet according to <11>, wherein the adhesive layer 1A and the adhesive layer 1B contain at least one selected from the group consisting of a polycarbonate-based resin, an acrylic resin, and a polyester-based resin.
<13> The laminated sheet according to <11> or <12>, wherein the adhesive layer 1A and the adhesive layer 1B are formed of an adhesive composition containing an isocyanate compound.
<14> The laminated sheet according to any one of <11> to <13>, wherein the laminated sheet has a resin film 1 on a surface of the adhesive layer 1B of the laminated sheet opposite to a surface having the fine fibrous cellulose-containing layer 1B.
<15> The laminated sheet according to <14>, wherein the resin film 1 has a thickness of 30 µm or more and 500 µm or less.
<16> A laminate further including a core resin plate on a surface of the adhesive layer 1A of the laminated sheet according to any one of <11> to <15> opposite to a surface having the fine fibrous cellulose-containing layer 1A.
<17> The laminate according to <16>, wherein the core resin plate has a thickness of 500 µm or more and 4,500 µm or less.
<18> The laminate according to <16> or <17>, wherein the core resin plate contains at least one selected from the group consisting of a polycarbonate resin and an acrylic resin.
<19> The laminate according to any one of <16> to <18>, wherein the laminate has, on a surface of the core resin plate opposite to a surface having the adhesive layer 1A, an adhesive layer 2A, a fine fibrous cellulose-containing layer 2A containing a fine fibrous cellulose having a fiber width of 1,000 nm or less and a hydrophilic polymer 2A, a fine fibrous cellulose-containing layer 2B containing a fine fibrous cellulose having a fiber width of 1,000 nm or less and a hydrophilic polymer 2B, an adhesive layer 2B, and a resin film 2 in this order from the core resin plate,
   the hydrophilic polymer 2A and the hydrophilic polymer 2B have a hydroxyl group, and
   provided that a hydroxyl value of the hydrophilic polymer 2A is defined as OHV_2A (mgKOH/g) and a hydroxyl value of the hydrophilic polymer 2B is defined as OHV_2B (mgKOH/g), the following expression (I') is satisfied: $OHV_ 2 A < OHV_ 2 B$ (I').
<20> The laminate according to any one of <14> to <19>, wherein a haze of the laminate is 2.0% or less.
<21> The laminate according to any one of <14> to <20>, wherein a total light transmittance of the laminate is 85% or more.
<22> The laminate according to any one of <14> to <21>, wherein a yellowness index (YI value) of the laminate is 2.50 or less.

### Advantageous Effects of Invention

According to the present invention, a laminate having excellent strength as a whole and excellent adhesive strength between layers is provided. In addition, a fine fibrous cellulose-containing sheet and a laminated sheet to be used in the laminate are provided.

### Brief Description of Drawings

Fig. 1 is a graph showing a relationship between the amount of NaOH added dropwise to a slurry containing a fibrous cellulose having a phosphorus oxoacid group and pH.
Fig. 2 is a graph showing a relationship between the amount of NaOH added dropwise to a slurry containing a fibrous cellulose having a carboxy group and pH.

### Description of Embodiments

Hereinafter, embodiments of the present invention will be described. Note that, in the present specification, "X to Y" indicating a range means "X or more and Y or less". In the present specification, an upper limit and a lower limit of a numerical range can be arbitrarily combined. In the present specification, the components that are contained and the components that can be contained in the respective layers constituting the laminate may be used singly, or two or more components may be used in combination.

### [Fine fibrous cellulose-containing sheet, laminated sheet, and laminate]

The fine fibrous cellulose-containing sheet of the present embodiment has a fine fibrous cellulose-containing layer 1A containing a fine fibrous cellulose having a fiber width of 1,000 nm or less and a hydrophilic polymer 1A, and a fine fibrous cellulose-containing layer 1B containing a fine fibrous cellulose having a fiber width of 1,000 nm or less and a hydrophilic polymer 1B, wherein
the hydrophilic polymer 1A and the hydrophilic polymer 1B have a hydroxyl group, and provided that a hydroxyl value of the hydrophilic polymer 1A is defined as OHV_1A (mgKOH/g) and a hydroxyl value of the hydrophilic polymer 1B is defined as OHV_1B (mgKOH/g), the following expression (I) is satisfied. $OHV_ 1 A < OHV_ 1 B$ (I)

In addition, the laminated sheet of the present embodiment has the fine fibrous cellulose-containing sheet, an adhesive layer 1A on a surface of the fine fibrous cellulose-containing layer 1A of the fine fibrous cellulose-containing sheet opposite to a surface having the fine fibrous cellulose-containing layer 1B, and an adhesive layer 1B on a surface of the fine fibrous cellulose-containing layer 1B opposite to a surface having the fine fibrous cellulose-containing layer 1A. In addition, the laminated sheet preferably has a resin film 1 on a surface of the adhesive layer 1B opposite to the surface having the fine fibrous cellulose-containing layer 1B.

Furthermore, the laminate of the present embodiment has a core resin plate on a surface of the adhesive layer 1A of the laminated sheet opposite to the surface having the fine fibrous cellulose-containing layer 1A.

The laminate of the present embodiment has excellent strength as a whole and excellent adhesiveness, and further has high total light transmittance, low haze, and a low YI value as additional effects.

Although the detailed mechanism by which the above effects can be obtained is unknown, a laminate including, on one surface of a core resin plate, an adhesive layer, a fine fibrous cellulose-containing layer, an adhesive layer, and a resin film in this order from the core resin plate has excellent strength as a whole by including the fine fibrous cellulose-containing layer. However, when the laminate is cut, there are cases where the laminate is peeled from its edge. As a result of studying this peeling, the present inventors have found that delamination occurs between the adhesive layer on the resin film side and the fine fibrous cellulose-containing layer.

Therefore, in consideration of the improvement of adhesiveness to the adhesive layer, the present inventors have found that the above problem is solved when two fine fibrous cellulose-containing layers are provided, and a hydrophilic polymer having a higher hydroxyl value is used for the fine fibrous cellulose-containing layer on the adhesive layer side.

Note that the above mechanism is an estimation, and is not limited thereto.

The laminate of the present embodiment preferably has, on one surface of the core resin plate, the adhesive layer 1A, the fine fibrous cellulose-containing layer 1A containing a fine fibrous cellulose having a fiber width of 1,000 nm or less and the hydrophilic polymer 1A, the fine fibrous cellulose-containing layer 1B containing a fine fibrous cellulose having a fiber width of 1,000 nm or less and the hydrophilic polymer 1B, and the adhesive layer 1B in this order from the core resin plate. The laminate of the present embodiment preferably further has the resin film 1 on the surface of the adhesive layer 1B opposite to the surface having the fine fibrous cellulose-containing layer 1B in this order, and more preferably has at least the adhesive layer 2 and the resin film 2 in this order on the surface of the core resin plate opposite to the surface having the adhesive layer 1A. From the viewpoint of improving the strength of the laminate, the laminate of the present embodiment preferably has the adhesive layer 2A, the fine fibrous cellulose-containing layer 2A containing a fine fibrous cellulose having a fiber width of 1,000 nm or less and the hydrophilic polymer 2A, the fine fibrous cellulose-containing layer 2B containing a fine fibrous cellulose having a fiber width of 1000 nm or less and the hydrophilic polymer 2B, the adhesive layer 2B, and the resin film 2, on the surface of the core resin plate opposite to the surface having the adhesive layer 1A in this order from the core resin plate. The hydrophilic polymer 2A and the hydrophilic polymer 2B have a hydroxyl group, and provided that the hydroxyl value of the hydrophilic polymer 2A is defined as OHV_2A (mgKOH/g) and the hydroxyl value of the hydrophilic polymer 2B is defined as OHV_2B (mgKOH/g), the following expression (I') is satisfied. $OHV_ 2 A < OHV_ 2 B$ (I')

Hereinafter, the present embodiment will be described in more detail.

### [Core resin plate]

The laminate of the present embodiment has a core resin plate. The core resin plate preferably contains at least one selected from the group consisting of a polycarbonate-based resin and an acrylic resin. The "polycarbonate-based resin" means a resin including a moiety in which constituent units are repeatedly bonded via a carbonate group (-O-(C=O)-O-). The "acrylic resin" means a resin having a constituent unit derived from (meth)acrylic acid or (meth)acrylic acid ester.

The core resin plate more preferably contains a polycarbonate-based resin or an acrylic resin, and still more preferably contains a polycarbonate-based resin.

The total content of the polycarbonate-based resin and the acrylic resin in the core resin plate is preferably 70% by mass or more, more preferably 75% by mass or more, still more preferably 80% by mass or more, further still more preferably 85% by mass or more, further still more preferably 90% by mass or more, and yet more preferably 95% by mass or more, and 100% by mass or less from the viewpoint of improving the strength and transparency of the laminate.

When the core resin plate contains a polycarbonate-based resin, for example, an acrylonitrile-butadiene-styrene copolymer or a polymethyl methacrylate resin may be contained in addition to the polycarbonate-based resin.

When the core resin plate contains an acrylic resin, for example, an acrylonitrile-butadiene-styrene copolymer or a polycarbonate-based resin may be contained in addition to the acrylic resin.

### <Thickness>

The thickness of the core resin plate in the present embodiment is preferably 200 µm or more and 5,000 µm or less, more preferably 500 µm or more, still more preferably 700 µm or more, and further still more preferably 900 µm or more, and more preferably 4,500 µm or less, still more preferably 4,000 µm or less, further still more preferably 3,500 µm or less, and yet more preferably 3,200 µm or less. The thickness of the core resin plate is preferably appropriately adjusted according to the application of the laminate.

### [Adhesive layers 1A, 1B, 2, 2A, 2B]

As described above, the laminated sheet of the present embodiment has the fine fibrous cellulose-containing sheet, the adhesive layer 1A on a surface of the fine fibrous cellulose-containing layer 1A of the fine fibrous cellulose-containing sheet opposite to a surface having the fine fibrous cellulose-containing layer 1B, and the adhesive layer 1B on a surface of the fine fibrous cellulose-containing layer 1B opposite to a surface having the fine fibrous cellulose-containing layer 1A.

As described above, the laminate of the present embodiment preferably has the adhesive layers 1A and 1B on one surface of the core resin plate, and the adhesive layer 2 on the other surface of the core resin plate, and more preferably has the adhesive layers 2A and 2B on the other surface of the core resin plate. The components that are contained and the components that can be contained in each layer of the adhesive layers 1A, 1B, 2, 2A, and 2B may be the same or different, but are preferably the same. Preferred forms of the components that are contained and the components that can be contained in each layer of the adhesive layers 1A, 1B, 2, 2A, and 2B are the same.

Hereinafter, the adhesive layers 1A, 1B, 2, 2A, and 2B are also collectively referred to simply as "adhesive layer".

Examples of the adhesive constituting the adhesive layer include polycarbonate-based resins, acrylic resins, polyester-based resins, vinyl chloride resins, vinyl acetate resins, urethane resins, silicone resins, epoxy resins, ethylene-vinyl acetate copolymer resins, polyvinyl alcohol resins, ethylene vinyl alcohol copolymer resins, and rubber-based emulsions such as SBR and NBR. One or more selected from the group consisting of polycarbonate-based resins, acrylic resins, and polyester-based resins are preferable, and polycarbonate-based resins are more preferable.

As the polycarbonate-based resin, for example, a polycarbonate copolymer described in JP 2008-24919 A can be used.

The adhesive layer is preferably formed of an adhesive composition containing an adhesion aid (formed using an adhesive composition containing an adhesion aid). Examples of the adhesion aid include a compound containing at least one selected from an isocyanate group, a carbodiimide group, an epoxy group, an oxazoline group, an amino group, and a silanol group. Among them, the adhesion aid is preferably a compound containing an isocyanate group (isocyanate compound) from the viewpoint of excellent adhesiveness to the fine fibrous cellulose-containing layer.

The adhesive composition preferably contains an adhesive and an adhesion aid, more preferably contains one or more selected from the group consisting of a polycarbonate-based resin, an acrylic resin, and a polyester-based resin, and an isocyanate compound, and still more preferably contains a polycarbonate-based resin and an isocyanate compound.

The content of the adhesion aid based on 100 parts by mass of the adhesive in the adhesive composition is preferably 5 parts by mass or more and 30 parts by mass or less, more preferably 10 parts by mass or more, and still more preferably 15 parts by mass or more, and more preferably 25 parts by mass or less and still more preferably 20 parts by mass or less from the viewpoint of improving adhesiveness.

The adhesive composition preferably contains an organic solvent, and examples of the organic solvent include toluene, methylene chloride, tetrahydrofuran, tetraglyme, dimethyl carbonate, methyl ethyl ketone, ethyl acetate, dimethylacetamide, and styrene.

The solid content concentration of the adhesive composition is preferably 1% by mass or more and 25% by mass or less, more preferably 4% by mass or more, still more preferably 7% by mass or more, and more preferably 20% by mass or less and still more preferably 15% by mass or less from the viewpoint of coating suitability and solvent removal.

### [Fine fibrous cellulose-containing layers 1A, 1B, 2A and 2B]

The fine fibrous cellulose-containing sheet of the present embodiment has the fine fibrous cellulose-containing layer 1A and the fine fibrous cellulose-containing layer 1B.

In addition, the laminated sheet of the present embodiment preferably has the fine fibrous cellulose-containing layer 1A and the fine fibrous cellulose-containing layer 1B, has the adhesive layer 1A on the surface of the fine fibrous cellulose-containing layer 1A opposite to the surface having the fine fibrous cellulose-containing layer 1B, has the adhesive layer 1B on the surface of the fine fibrous cellulose-containing layer 1B opposite to the surface having the fine fibrous cellulose-containing layer 1A, and has the resin film 1 on the surface of the adhesive layer 1B opposite to the surface having the fine fibrous cellulose-containing layer 1B.

Furthermore, as described above, the laminate of the present embodiment has the fine fibrous cellulose-containing layers 1A and 1B containing a fine fibrous cellulose having a fiber width of 1,000 nm or less on one surface of the core resin plate. In addition, the laminate of the present embodiment preferably has the fine fibrous cellulose-containing layers 2A and 2B containing a fine fibrous cellulose having a fiber width of 1,000 nm or less on the other surface of the core resin plate.

The components that are contained and the components that can be contained in the fine fibrous cellulose-containing layer 1A, and the thickness, basis weight, and density of the fine fibrous cellulose-containing layer 1A, and the components that are contained and the components that can be contained in the fine fibrous cellulose-containing layer 2A, and the thickness, basis weight, and density of the fine fibrous cellulose-containing layer 2A may be the same or different from each other, but are preferably the same.

Similarly, the components that are contained and the components that can be contained in the fine fibrous cellulose-containing layer 1B, and the thickness, basis weight, and density of the fine fibrous cellulose-containing layer 1B, and the components that are contained and the components that can be contained in the fine fibrous cellulose-containing layer 2B, and the thickness, basis weight, and density of the fine fibrous cellulose-containing layer 2B may be the same or different from each other, but are preferably the same.

As for a preferred form described below, the fine fibrous cellulose-containing layer 1A and the fine fibrous cellulose-containing layer 2A are the same, and the fine fibrous cellulose-containing layer 2A and the fine fibrous cellulose-containing layer 2B are the same.

Hereinafter, the fine fibrous cellulose-containing layers 1A, 1B, 2A, and 2B are also collectively referred to simply as "fine fibrous cellulose-containing layers".

### <Fine fibrous cellulose>

The fine fibrous cellulose is a fibrous cellulose having a fiber width of 1,000 nm or less. Note that the fiber width of the fibrous cellulose can be measured, for example, by electron microscopic observation.

The fiber width of the fine fibrous cellulose is 1,000 nm or less. The fiber width of the fine fibrous cellulose is preferably 2 nm or more and 1,000 nm or less, more preferably 2 nm or more and 100 nm or less, still more preferably 2 nm or more and 50 nm or less, and further still more preferably 2 nm or more and 10 nm or less. By setting the fiber width of the fine fibrous cellulose to 2 nm or more, it is possible to suppress dissolution of the fine fibrous cellulose in water as cellulose molecules and to more easily exhibit an effect of improving strength and dimensional stability by the fine fibrous cellulose.

The average fiber width of the fine fibrous cellulose is, for example, 1,000 nm or less. The average fiber width of the fine fibrous cellulose is preferably 2 nm or more and 1,000 nm or less, more preferably 2 nm or more and 100 nm or less, still more preferably 2 nm or more and 50 nm or less, and further still more preferably 2 nm or more and 10 nm or less. By setting the average fiber width of the fine fibrous cellulose to 2 nm or more, it is possible to suppress dissolution of the fine fibrous cellulose in water as cellulose molecules and to more easily exhibit an effect of improving strength and dimensional stability by the fine fibrous cellulose. Note that the fine fibrous cellulose is, for example, a monofilamentous cellulose.

The number average fiber width of the fine fibrous cellulose is measured as follows using, for example, an electron microscope. First, an aqueous suspension of a fine fibrous cellulose having a concentration of 0.01% by mass or more and 0.1% by mass or less is prepared, and the suspension is cast onto a carbon membrane-coated grid subjected to a hydrophilization treatment to obtain a sample for transmission electron microscope (TEM) observation. When the fine fibrous cellulose includes a wide fiber, a scanning electron microscope (SEM) image on a surface of glass onto which the suspension has been cast may be observed. Next, observation with an electron microscope image is performed at a magnification of 1,000 times, 5,000 times, 10,000 times, or 50,000 times depending on the width of a fiber to be observed. Note that a sample, observation conditions, and magnification are adjusted so as to satisfy the following conditions.
(1) One straight line X is drawn at an arbitrary position in an observation image, and 20 or more fibers intersect the straight line X.
(2) A straight line Y perpendicularly intersecting the straight line is drawn in the same image, and 20 or more fibers intersect the straight line Y.

For an observation image satisfying the above conditions, the width of a fiber intersecting the straight line X and the straight line Y is visually read. In this way, at least three or more sets of observation images of surface portions not overlapping each other are obtained. Next, for each image, the width of a fiber intersecting the straight line X and the straight line Y is read. As a result, the fiber widths of at least 20 fibers × 2 × 3 = 120 fibers are read. Then, an average value of the read fiber widths is defined as a number average fiber width of the fibrous cellulose.

The fiber length of the fine fibrous cellulose is not particularly limited, but is, for example, preferably 0.1 µm or more and 1,000 µm or less, more preferably 0.1 µm or more and 800 µm or less, and still more preferably 0.1 µm or more and 600 µm or less. By setting the fiber length within the above range, destruction of a crystalline region of the fine fibrous cellulose can be suppressed. It is also possible to set a viscosity of a slurry of the fine fibrous cellulose within an appropriate range. Note that the fiber length of the fine fibrous cellulose can be determined by image analysis, for example, using a TEM, an SEM, or an atomic force microscope (AFM).

The fine fibrous cellulose preferably has a type I crystal structure. Here, the presence of the type I crystal structure of the fine fibrous cellulose can be identified in a diffraction profile which is obtained from a wide-angle X-ray diffraction photograph using CuKα (λ = 1.5418 Å) monochromatized with graphite. Specifically, the type I crystal structure can be identified by having typical peaks at two positions in the vicinity of 2θ = 14° or more and 17° or less and in the vicinity of 2θ = 22° or more and 23° or less.

The ratio of the type I crystal structure in the fine fibrous cellulose is, for example, preferably 30% or more, more preferably 40% or more, and still more preferably 50% or more. Thereby, a further excellent performance in terms of development of low linear thermal expansion coefficient can be expected. The crystallinity can be determined from a pattern of an X-ray diffraction profile which has been measured, by a conventional method (Seagal et al., Textile Research Journal, vol. 29, p. 786, 1959).

The axial ratio (fiber length/fiber width) of the fine fibrous cellulose is not particularly limited, but is, for example, preferably 20 or more and 10,000 or less, and more preferably 50 or more and 1,000 or less. When the axial ratio is controlled to be the above lower limit value or more, it becomes easy to form a sheet containing the fine fibrous cellulose. By setting the axial ratio to the above upper limit value or less, for example, when the fine fibrous cellulose is treated as an aqueous dispersion, handling such as dilution is easily performed, which is preferable.

The fine fibrous cellulose in the present embodiment preferably has, for example, at least one of an ionic substituent and a nonionic substituent. From the viewpoint of improving the dispersibility of the fibers in the dispersion medium and increasing the defibration efficiency in the defibration treatment, the fine fibrous cellulose more preferably has an ionic substituent. Examples of the ionic substituent include one or both of an anionic group and a cationic group. Examples of the nonionic substituent include an alkyl group and an acyl group. In the present embodiment, the fine fibrous cellulose particularly preferably has an anionic group as an ionic substituent. In addition, the ionic substituent is preferably a group introduced into the fine fibrous cellulose via an ester bond or an ether bond, and more preferably a group introduced into the fine fibrous cellulose via an ester bond. In this case, the ester bond is preferably formed through dehydration condensation of the fine fibrous cellulose and a compound serving as an ionic substituent.

Note that the fine fibrous cellulose may not be subjected to a treatment for introducing an ionic substituent.

Examples of the anionic group as the ionic substituent include a phosphorus oxoacid group or a substituent derived from a phosphorus oxoacid group (also simply referred to as a phosphorus oxoacid group), a carboxy group or a substituent derived from a carboxy group (also simply referred to as a carboxy group), a sulfur oxoacid group or a substituent derived from a sulfur oxoacid group (also simply referred to as a sulfur oxoacid group), a xanthate group or a substituent derived from a xanthate group (also simply referred to as a xanthate group), a phosphonate group or a substituent derived from a phosphonate group, a phosphine group or a substituent derived from a phosphine group, a sulfonic acid group or a substituent derived from a sulfonic acid group, and a carboxyalkyl group. Among them, the anionic group is preferably at least one selected from the group consisting of a phosphorus oxoacid group, a substituent derived from a phosphorus oxoacid group, a carboxy group, a carboxymethyl group, a carboxyethyl group, a sulfur oxoacid group and a sulfur oxoacid group, a xanthate group, and a substituent derived from a sulfonic acid group, more preferably at least one selected from the group consisting of a phosphorus oxoacid group, a substituent derived from a phosphorus oxoacid group, a carboxy group, a sulfur oxoacid group, a substituent derived from a sulfur oxoacid group, and a xanthate group, still more preferably at least one selected from the group consisting of a phosphorus oxoacid group, a substituent derived from a phosphorus oxoacid group, a carboxy group, a sulfur oxoacid group, and a substituent derived from a sulfur oxoacid group, and particularly preferably a phosphorus oxoacid group. By introducing the phosphorus oxoacid group as an anionic group, for example, the dispersibility of the fibrous cellulose can be further enhanced even under alkaline conditions or acidic conditions, and as a result, a highly strong and highly transparent fine fibrous cellulose-containing layer is easily obtained. Examples of the cationic group as the ionic substituent include an ammonium group, a phosphonium group, and a sulfonium group. Among them, the cationic group is preferably an ammonium group.

The phosphorus oxoacid group or the substituent derived from the phosphorus oxoacid group is, for example, a substituent represented by the following formula (1). A plurality of substituents represented by the following formula (1) may be introduced into the fine fibrous cellulose. In this case, a plurality of substituents represented by the following formula (1) to be introduced may be the same or different.

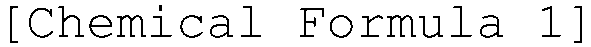

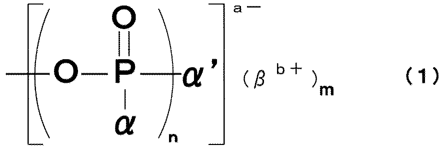

In the formula (1), a, b, and n are natural numbers, and m is any number (provided that a = b × m). At least one (preferably a) of n α and α' is O⁻, and the remaining αs and α' are R or OR. Note that all αs and α' may be O⁻. All n αs may be the same or different. βb⁺ is a monovalent or higher valent cation formed of an organic substance or an inorganic substance.

Rs are each a hydrogen atom, a saturated linear chain hydrocarbon group, a saturated branched chain hydrocarbon group, a saturated cyclic hydrocarbon group, an unsaturated linear chain hydrocarbon group, an unsaturated branched chain hydrocarbon group, an unsaturated cyclic hydrocarbon group, an aromatic group, or a derivative group thereof. α in the formula (1) may be a group derived from a cellulose molecular chain. In the formula (1), n is preferably 1.

Examples of the saturated linear chain hydrocarbon group include a methyl group, an ethyl group, a n-propyl group, and a n-butyl group, but are not particularly limited thereto. Examples of the saturated branched chain hydrocarbon group include an i-propyl group and a t-butyl group, but are not particularly limited thereto. Examples of the saturated cyclic hydrocarbon group include a cyclopentyl group and a cyclohexyl group, but are not particularly limited thereto. Examples of the unsaturated linear chain hydrocarbon group include a vinyl group and an allyl group, but are not particularly limited thereto. Examples of the unsaturated branched chain hydrocarbon group include an i-propenyl group and a 3-butenyl group, but are not particularly limited thereto. Examples of the unsaturated cyclic hydrocarbon group include a cyclopentenyl group and a cyclohexenyl group, but are not particularly limited thereto. Examples of the aromatic group include a phenyl group and a naphthyl group, but are not particularly limited thereto.

Examples of the derivative group in R include a functional group in a state in which at least one selected from functional groups such as a carboxy group, a carboxylate group (-COO⁻), a hydroxy group, and an amino group is added to or substituted in a main chain or a side chain of each of the above various hydrocarbon groups, but are not particularly limited thereto. The number of carbon atoms constituting the main chain of R is not particularly limited, but is preferably 20 or less, and more preferably 10 or less. By setting the number of carbon atoms constituting the main chain of R within the above range, a molecular weight of the phosphorus oxoacid group can be set within an appropriate range, permeation into a fiber raw material can be facilitated, and a yield of the fine fibrous cellulose can be increased. Note that, when a plurality of Rs are present in the formula (1) or when a plurality of types of substituents represented by the formula (1) are introduced into the fine fibrous cellulose, the plurality of Rs may be the same or different.

β^{b+} is a monovalent or higher valent cation formed of an organic substance or an inorganic substance. Examples of the monovalent or higher valent cation formed of an organic substance include an organic onium ion. Examples of the organic onium ion include an organic ammonium ion and an organic phosphonium ion. Examples of the organic ammonium ion include an aliphatic ammonium ion and an aromatic ammonium ion, and examples of the organic phosphonium ion include an aliphatic phosphonium ion and an aromatic phosphonium ion. Examples of the monovalent or higher valent cation formed of an inorganic substance include an ion of an alkali metal such as sodium, potassium, or lithium, an ion of a divalent metal such as calcium or magnesium, a hydrogen ion, and an ammonium ion, but are not particularly limited thereto. These can be applied singly or in combination of two or more thereof. Note that, when a plurality of β^{b+}s are present in the formula (1) or when a plurality of types of substituents represented by the formula (1) are introduced into the fine fibrous cellulose, the plurality of β^{b+}s may be the same or different. As the monovalent or higher valent cation formed of an organic substance or an inorganic substance, an ion of sodium or potassium which is less likely to cause yellowing of the fiber raw material when the fiber raw material containing β^{b+} is heated and which is industrially easily used is preferable, but the monovalent or higher valent cation is not particularly limited.

More specific examples of the phosphorus oxoacid group or the substituent derived from the phosphorus oxoacid group include a phosphoric acid group (-PO₃H₂), a salt of a phosphoric acid group, a phosphorous acid group (phosphonic acid group) (-PO₂H₂), and a salt of a phosphorous acid group (phosphonic acid group). In addition, the phosphorus oxoacid group or the substituent derived from the phosphorus oxoacid group may be a group in which a phosphoric acid group is condensed (for example, a pyrophosphoric acid group), a group in which a phosphonic acid is condensed (for example, a polyphosphonic acid group), a phosphate ester group (for example, a monomethyl phosphate group or a polyoxyethylene alkyl phosphate group), and an alkyl phosphonate group (for example, a methyl phosphonate group).

The sulfur oxoacid group (the sulfur oxoacid group or the substituent derived from the sulfur oxoacid group) is, for example, a substituent represented by the following formula (2). A plurality of types of substituents represented by the following formula (2) may be introduced into the fine fibrous cellulose. In this case, a plurality of substituents represented by the following formula (2) to be introduced may be the same or different.

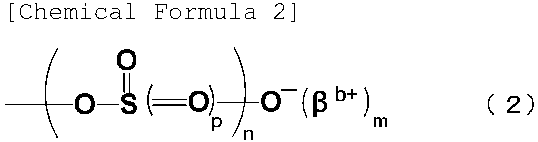

In the formula (2), b and n are natural numbers, p is 0 or 1, and m is any number (provided that 1 = b × m). When n is 2 or more, a plurality of ps may be the same number or different numbers. In the formula (2), β^{b+} is a monovalent or higher valent cation formed of an organic substance or an inorganic substance. Examples of the monovalent or higher valent cation formed of an organic substance include an organic onium ion. Examples of the organic onium ion include an organic ammonium ion and an organic phosphonium ion. Examples of the organic ammonium ion include an aliphatic ammonium ion and an aromatic ammonium ion, and examples of the organic phosphonium ion include an aliphatic phosphonium ion and an aromatic phosphonium ion. Examples of the monovalent or higher valent cation formed of an inorganic substance include an ion of an alkali metal such as sodium, potassium, or lithium, an ion of a divalent metal such as calcium or magnesium, a hydrogen ion, and an ammonium ion. Note that, when a plurality of types of substituents represented by the formula (2) are introduced into the fine fibrous cellulose, the plurality of β^{b+}s may be the same or different. As the monovalent or higher valent cation formed of an organic substance or an inorganic substance, an ion of sodium or potassium which is less likely to cause yellowing of the fiber raw material when the fiber raw material containing β^{b+} is heated and which is industrially easily used is preferable, but the monovalent or higher valent cation is not particularly limited.

The amount of ionic substituents introduced into the fine fibrous cellulose is, for example, preferably 0.05 mmol/g or more, more preferably 0.10 mmol/g or more, still more preferably 0.20 mmol/g or more, further still more preferably 0.50 mmol/g or more, and particularly preferably 1.00 mmol/g or more per 1 g (mass) of the fine fibrous cellulose. The amount of ionic substituents introduced into the fine fibrous cellulose is, for example, preferably 5.20 mmol/g or less, more preferably 3.65 mmol/g or less, still more preferably 3.50 mmol/g or less, and further still more preferably 3.00 mmol/g or less per 1 g (mass) of the fibrous cellulose. By setting the amount of ionic substituents (preferably anionic groups) introduced within the above range, the fiber raw material can be easily refined, and the stability of the fine fibrous cellulose can be enhanced.

Here, the denominator in the unit mmol/g indicates the mass of the fine fibrous cellulose when the counter ion of the ionic substituent is a hydrogen ion (H⁺).

The amount of ionic substituents (preferably an anionic group) introduced into the fine fibrous cellulose is preferably less than 0.50 mmol/g, more preferably 0.40 mmol/g or less, still more preferably 0.30 mmol/g or less, further still more preferably 0.25 mmol/g or less, and particularly preferably 0.15 mmol/g or less per 1 g (mass) of the fine fibrous cellulose from the viewpoint of water absorbability of the laminate, and preferably 0.01 mmol/g or more, more preferably 0.02 mmol/g or more, and still more preferably 0.03 mmol/g or more per 1 g (mass) of the fine fibrous cellulose from the viewpoint of total light transmittance and haze of the laminate. Such a fine fibrous cellulose having a low amount of substituents may be obtained, for example, by subjecting the fine fibrous cellulose to a treatment described later for removing substituents.

The amount of ionic substituents introduced into the fine fibrous cellulose can be measured by, for example, a neutralization titration method. In measurement by a neutralization titration method, a change in pH is determined while an alkali such as a sodium hydroxide aqueous solution is added to a slurry containing the obtained fine fibrous cellulose, whereby the amount of introduction is measured.

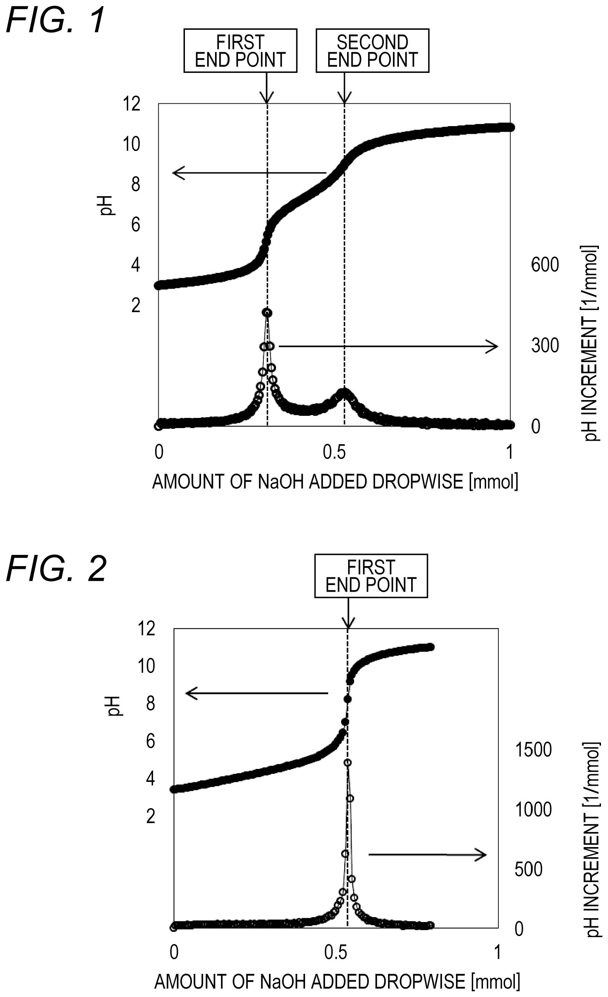

Fig. 1 is a graph showing a relationship between the amount of NaOH added dropwise to a slurry containing a fibrous cellulose having a phosphorus oxoacid group and pH. The amount of phosphorus oxoacid groups introduced into the fibrous cellulose can be measured, for example, as follows.

First, a slurry containing a fibrous cellulose is treated with a strongly acidic ion exchange resin. Note that, before the treatment with the strongly acidic ion exchange resin, a defibration treatment similar to a defibration treatment step described later may be performed on the measurement target as necessary.

Next, a change in pH is observed while a sodium hydroxide aqueous solution is added, and a titration curve as indicated in an upper part of Fig. 1 is obtained. In the titration curve indicated in the upper part of Fig. 1, a measured pH is plotted with respect to the amount of the alkali added, and in the titration curve indicated in a lower part of Fig. 1, an increment (differential value) (1/mmol) of a pH with respect to the amount of the alkali added is plotted. In this neutralization titration, two points at which the increment (differential value of a pH with respect to the amount of the alkali added dropwise) is maximum are confirmed in the curve obtained by plotting a measured pH with respect to the amount of the alkali added. Out of these points, a maximum point of the increment obtained first after addition of the alkali is referred to as a first end point, and a maximum point of the increment obtained next is referred to as a second end point. The alkali amount required from start of titration to the first end point is equal to a first dissociated acid amount of the fibrous cellulose contained in the slurry used for titration, the alkali amount required from the first end point to the second end point is equal to a second dissociated acid amount of the fibrous cellulose contained in the slurry used for titration, and the alkali amount required from the start of titration to the second end point is equal to a total dissociated acid amount of the fibrous cellulose contained in the slurry used for titration. A value obtained by dividing the alkali amount required from the start of titration to the first end point by the solid content (g) in the slurry to be titrated is the amount of phosphorus oxoacid groups introduced (mmol/g). Note that the simple term "the amount of phosphorus oxoacid groups introduced (or the amount of phosphorus oxoacid groups)" refers to the first dissociated acid amount.

Note that, in Fig. 1, a region ranging from the start of titration to the first end point is referred to as a first region, and a region ranging from the first end point to the second end point is referred to as a second region. For example, when the phosphorus oxoacid group is a phosphoric acid group and the phosphorus oxoacid group causes condensation, the amount of weakly acidic groups in the phosphorus oxoacid group (also referred to as the "second dissociated acid amount" in the present specification) is apparently reduced, and the alkali amount required for the second region is decreased as compared with the alkali amount required for the first region. Meanwhile, the amount of strongly acidic groups in the phosphorus oxoacid group (also referred to as the "first dissociated acid amount" in the present specification) coincides with the amount of phosphorus atoms regardless of presence or absence of condensation. When the phosphorus oxoacid group is a phosphorous acid group, since a weakly acidic group is not present in the phosphorus oxoacid group, the alkali amount required for the second region may be decreased, or the alkali amount required for the second region may be zero. In this case, in the titration curve, there is only one point at which the increment of a pH is maximum.

Note that the denominator of the above-described amount of phosphorus oxoacid groups introduced (mmol/g) indicates the mass of an acid type fibrous cellulose. Therefore, the amount of phosphorus oxoacid groups introduced (mmol/g) indicates the amount of phosphorus oxoacid groups of the acid type fibrous cellulose (hereinafter, referred to as "amount of phosphorus oxoacid groups (acid type)"). On the other hand, when the counter ion of the phosphorus oxoacid group is replaced with any cation C so as to achieve charge equivalent, the denominator is converted into the mass of a fibrous cellulose in which the cation C is the counter ion, whereby the amount of phosphorus oxoacid groups of the fibrous cellulose in which the cation C is the counter ion (hereinafter, referred to as "amount of phosphorus oxoacid groups (C type)") can be determined.

That is, the amount of phosphorus oxoacid groups (C type) is calculated by the following calculation formula. 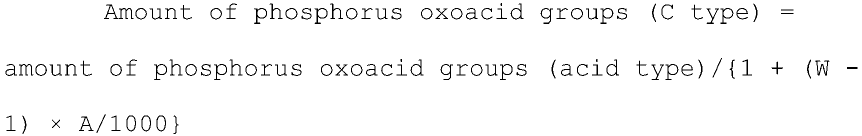 Amount of phosphorus oxoacid groups (C type) = amount of phosphorus oxoacid groups (acid type)/{1 + (W - 1) × A/1000}
A [mmol/g]: Total amount of anions derived from phosphorus oxoacid groups of fibrous cellulose (value obtained by adding the amount of strongly acidic groups and the amount of weakly acidic groups of phosphorus oxoacid groups)
W: Formula amount per valence of cation C (for example, Na is 23, and Al is 9.)

Fig. 2 is a graph showing a relationship between the amount of NaOH added dropwise to a fine fibrous cellulose having a carboxy group and pH.

The amount of carboxy groups introduced into the fine fibrous cellulose can be measured, for example, as follows.

First, a slurry containing a fine fibrous cellulose is treated with a strongly acidic ion exchange resin. Note that, before the treatment with the strongly acidic ion exchange resin, a defibration treatment similar to a defibration treatment step described later may be performed on the measurement target as necessary. Next, a change in pH is observed while a sodium hydroxide aqueous solution is added, and a titration curve as indicated in Fig. 2 is obtained. Note that, a similar defibration treatment to a defibration treatment step described later may be performed on the measurement target as necessary.

As illustrated in Fig. 2, in this neutralization titration, one point at which the increment (differential value of a pH with respect to the amount of the alkali added dropwise) is maximum is observed in the curve obtained by plotting a measured pH with respect to the amount of the alkali added. The maximum point of this increment is referred to as a first end point. Here, a region ranging from the start of titration to the first end point in Fig. 2 is referred to as a first region. The alkali amount required for the first region is equal to the amount of carboxy groups in the slurry used for titration. Then, the alkali amount (mmol) required for the first region of the titration curve was divided by the solid content (g) in the fine fibrous cellulose-containing slurry to be titrated, thereby calculating the amount of carboxy groups introduced (mmol/g).

The amount of carboxy groups introduced (mmol/g) indicates the amount of substituents per 1 g of the mass of the fibrous cellulose when the counter ion of the carboxy group is a hydrogen ion (H⁺) (hereinafter, referred to as "amount of carboxy groups (acid type)").

Note that the denominator of the above-described amount of carboxy groups introduced (mmol/g) indicates the mass of an acid type fibrous cellulose. Therefore, the amount of carboxy groups introduced (mmol/g) indicates the amount of carboxy groups of the acid type fibrous cellulose (hereinafter, referred to as "amount of carboxy groups (acid type)"). On the other hand, when the counter ion of the carboxy group is replaced with any cation C so as to achieve charge equivalent, the denominator is converted into the mass of a fibrous cellulose in which the cation C is the counter ion, whereby the amount of carboxy groups of the fibrous cellulose in which the cation C is the counter ion (hereinafter, referred to as "amount of carboxy groups (C type)") (mmol/g) can be determined.

That is, the amount of carboxy groups (C type) is calculated by the following calculation formula. 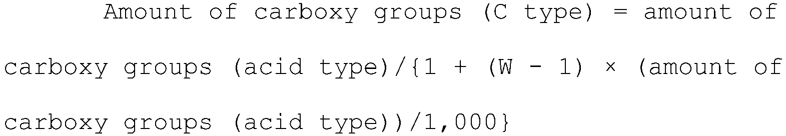 Amount of carboxy groups (C type) = amount of carboxy groups (acid type)/{1 + (W - 1) × (amount of carboxy groups (acid type))/1,000} W: Formula amount per valence of cation C (for example, Na is 23, and Al is 9.)

Note that, in the measurement of the amount of substituents by the titration method, when the amount of a single droplet of a sodium hydroxide aqueous solution added dropwise is too large, or when a titration interval is too short, the amount of substituents may be measured to be lower than an actual value, and thus, a precise value cannot be obtained in some cases. As an appropriate amount added dropwise and an appropriate titration interval, for example, titration is desirably performed by dropwise adding 10 to 50 µL of a 0.1 N sodium hydroxide aqueous solution every 5 to 30 seconds. In addition, in order to eliminate an influence of carbon dioxide dissolved in the fibrous cellulose-containing slurry, for example, it is desirable to perform measurement while blowing an inert gas such as nitrogen gas into the slurry from 15 minutes before the start of titration to the end of titration.

The amount of sulfur oxoacid groups or sulfonic acid groups introduced into the fibrous cellulose can be calculated by freeze-drying the slurry containing a fibrous cellulose, further pulverizing the resultant, and measuring the amount of sulfur in the pulverized sample. Specifically, the slurry containing a fibrous cellulose is freeze-dried and pulverized, and the obtained sample is subjected to hydrothermal decomposition using nitric acid in a sealed container and then appropriately diluted, and the amount of sulfur is measured by ICP-OES. The value calculated by dividing the amount of sulfur by the absolute dry mass of the fibrous cellulose supplied to a test is taken as the amount of sulfur oxoacid groups or the amount of sulfonic acid groups of the fibrous cellulose (unit: mmol/g).

### <<Method for producing fine fibrous cellulose>>

### (Cellulose-containing fiber raw material)

The fine fibrous cellulose is produced from a cellulose-containing fiber raw material.

The cellulose-containing fiber raw material is not particularly limited, but it is preferable to use pulp from the viewpoint of being easily available and inexpensive. Examples of the pulp include a wood pulp, a non-wood pulp, and a deinked pulp. The wood pulp is not particularly limited, but examples thereof include: chemical pulps such as hardwood kraft pulp (LBKP), softwood kraft pulp (NBKP), sulfite pulp (SP), dissolving pulp (DP), soda pulp (AP), unbleached kraft pulp (UKP), and oxygen-bleached kraft pulp (OKP); semi-chemical pulps such as semi-chemical pulp (SCP) and chemigroundwood pulp (CGP); and mechanical pulps such as ground wood pulp (GP) and thermomechanical pulp (TMP and BCTMP). The non-wood pulp is not particularly limited, but examples thereof include: cotton-based pulps such as cotton linter and cotton lint; and non-wood based pulps such as hemp, wheat straw and bagasse. The deinked pulp is not particularly limited, but examples thereof include a deinked pulp of which the raw material is waste paper. As the pulp of the present embodiment, one of the above pulps may be used singly, or two or more thereof may be used in combination.

Among the above pulps, for example, wood pulp and deinked pulp are preferable from the viewpoint of availability. Among the wood pulps, for example, chemical pulp is more preferable, and kraft pulp and sulfite pulp are still more preferable, from the viewpoint that a cellulose ratio is high, and the yield of the fine fibrous cellulose at the time of defibration treatment is high, and from the viewpoint that decomposition of cellulose in pulp is low, and fine fibrous cellulose of long fibers having a large axial ratio is obtained. When fine fibrous cellulose of long fibers having a large axial ratio is used, the viscosity tends to increase.

As the cellulose-containing fiber raw material, it is also possible to use, for example, cellulose contained in ascidians, or bacterial cellulose produced by acetic acid bacteria.

It is also possible to employ the fiber which is formed by a linear chain type nitrogen-containing polysaccharide polymer such as chitin or chitosan, instead of the cellulose-containing fiber raw material.

In order to obtain the above-described fine fibrous cellulose having an ionic substituent introduced thereinto, an ionic substituent introduction step of introducing an ionic substituent into the above-described cellulose-containing fiber raw material, a washing step, an alkali treatment step (neutralization step), and a defibration treatment step are preferably included in this order, and an acid treatment step may be included instead of or in addition to the washing step. Examples of the ionic substituent introduction step include a phosphorus oxoacid group introduction step, a carboxy group introduction step, a sulfur oxoacid group introduction step, a xanthate group introduction step, a phosphonate group or phosphine group introduction step, a sulfonic acid group introduction step, and a cationic group introduction step. Each step will be described below.

### (Ionic substituent introduction step)

### -Phosphorus oxoacid group introduction step-

The phosphorus oxoacid group introduction step is a step of allowing at least one compound (hereinafter, also referred to as "compound A") selected from compounds capable of introducing a phosphorus oxoacid group to act on a cellulose-containing fiber raw material by a reaction between the compound A and a hydroxyl group of the cellulose-containing fiber raw material. By this step, a phosphorus oxoacid group-introduced fiber is obtained.

In the phosphorus oxoacid group introduction step according to the present embodiment, the reaction between the cellulose-containing fiber raw material and the compound A may be performed in the presence of at least one selected from urea and derivatives thereof (hereinafter, also referred to as "compound B"). On the other hand, the reaction between the cellulose-containing fiber raw material and the compound A may be performed in the absence of the compound B.

An example of a method for allowing the compound A to act on the fiber raw material in the coexistence with the compound B is a method for mixing the compound A and the compound B with the fiber raw material in a dry state, a wet state, or a slurry state. Among these, it is preferable to use the fiber raw material in a dry state or a wet state, and it is particularly preferable to use the fiber raw material in a dry state because uniformity of the reaction is high. The form of the fiber raw material is not particularly limited, but is preferably, for example, a cotton form or a thin sheet form. Examples of the method include a method for adding the compound A and the compound B to the fiber raw material while each of the compound A and the compound B is in a powder form, is in a solution form in which the compound A and the compound B are dissolved in a solvent, or is in a melted state by being heated to a melting point or higher. Among these, it is preferable to add the compound A and the compound B in a solution form in which the compound A and the compound B are dissolved in a solvent, particularly in an aqueous solution state because uniformity of the reaction is high. In addition, the compound A and the compound B may be simultaneously added to the fiber raw material, may be separately added, or may be added as a mixture. A method for adding the compound A and the compound B is not particularly limited, but when each of the compound A and the compound B is in a form of a solution, the fiber raw material may be immersed in the solution to absorb liquid, and then taken out, or the solution may be added dropwise to the fiber raw material. In addition, required amounts of the compound A and the compound B may be added to the fiber raw material, or excess amounts of the compound A and the compound B may be added to the fiber raw material, and then surplus amounts of the compound A and the compound B may be removed by compression or filtration.

The compound A used in the present embodiment only needs to be a compound having a phosphorus atom and capable of forming an ester bond with a cellulose, and examples thereof include phosphoric acid or a salt thereof, phosphorous acid or a salt thereof, dehydration-condensed phosphoric acid or a salt thereof, and phosphoric anhydride (diphosphorus pentoxide), but are not particularly limited thereto. As the phosphoric acid, phosphoric acids having various purities can be used, and for example, 100% phosphoric acid (orthophosphoric acid) or 85% phosphoric acid can be used. Examples of the phosphorous acid include 99% phosphorous acid (phosphonic acid). The dehydration-condensed phosphoric acid is obtained by condensing two or more molecules of phosphoric acid by a dehydration reaction, and examples thereof include pyrophosphoric acid and polyphosphoric acid. Examples of the phosphate, phosphite, and dehydration-condensed phosphate include a lithium salt, a sodium salt, a potassium salt, and an ammonium salt of phosphoric acid, phosphorous acid, or dehydration-condensed phosphoric acid, and these can have various degrees of neutralization.

Among them, phosphoric acid, a sodium salt of phosphoric acid, a potassium salt of phosphoric acid, or an ammonium salt of phosphoric acid is preferable, and phosphoric acid, sodium dihydrogen phosphate, disodium hydrogen phosphate, or ammonium dihydrogen phosphate is more preferable from the viewpoint of high introduction efficiency of the phosphorus oxoacid group, easiness of further improving defibration efficiency in the defibration step described later, lower cost, and easy industrial application.

The amount of the compound A added to the fiber raw material is not particularly limited, but for example, when the amount of the compound A added is converted into the amount of phosphorus atoms, the amount of phosphorus atom added to 100 parts by mass (absolute dry mass) of the fiber raw material is preferably 0.5 parts by mass or more and 100 parts by mass or less, more preferably 1 part by mass or more and 50 parts by mass or less, and still more preferably 2 parts by mass or more and 30 parts by mass or less. By setting the amount of phosphorus atoms added to the fiber raw material within the above range, the yield of the fine fibrous cellulose can be further improved. On the other hand, by setting the amount of phosphorus atoms added to the fiber raw material to the above upper limit value or less, a balance between an effect of improving the yield and cost can be achieved.

The compound B used in the present embodiment is at least one selected from urea and derivatives thereof as described above. Examples of the compound B include urea, biuret, 1-phenylurea, 1-benzylurea, 1-methylurea, and 1-ethylurea.

The compound B is preferably used as an aqueous solution from the viewpoint of improving uniformity of the reaction. In addition, it is preferable to use an aqueous solution in which both the compound A and the compound B are dissolved from the viewpoint of further improving the uniformity of the reaction.

The amount of the compound B added to 100 parts by mass (absolute dry mass) of the fiber raw material is not particularly limited, but is, for example, preferably 1 part by mass or more and 500 parts by mass or less, more preferably 10 parts by mass or more and 400 parts by mass or less, and still more preferably 100 parts by mass or more and 350 parts by mass or less.

In the reaction between the cellulose-containing fiber raw material and the compound A, for example, amides or amines may be included in the reaction system in addition to the compound B. Examples of the amides include formamide, dimethylformamide, acetamide, and dimethylacetamide. Examples of the amines include methylamine, ethylamine, trimethylamine, triethylamine, monoethanolamine, diethanolamine, triethanolamine, pyridine, ethylenediamine, and hexamethylenediamine. Among these, particularly triethylamine is known to act as a favorable reaction catalyst.

In the phosphorus oxoacid group introduction step, it is preferable to add or mix the compound A and the like to the fiber raw material, and then to subject the fiber raw material to a heat treatment. As a heat treatment temperature, it is preferable to select a temperature at which a phosphorus oxoacid group can be efficiently introduced while suppressing thermal decomposition and a hydrolysis reaction of a fiber. The heat treatment temperature is, for example, preferably 50°C or higher and 300°C or lower, more preferably 100°C or higher and 250°C or lower, and still more preferably 130°C or higher and 200°C or lower. In the heat treatment, various devices having heat media can be used, and for example, a stirring and drying device, a rotary drying device, a disk drying device, a roll type heating device, a plate type heating device, a fluidized bed drying device, a band type drying device, a filtration drying device, a vibration fluidizing drying device, an airflow drying device, a reduced pressure drying device, an infrared heating device, a far infrared heating device, a microwave heating device, or a high frequency drying device can be used.

In the heat treatment according to the present embodiment, for example, a method for adding the compound A to a thin sheet-shaped fiber raw material by a method such as impregnation and then heating the mixture or a method for heating the fiber raw material and the compound A while kneading or stirring the fiber raw material and the compound A with a kneader or the like can be adopted. This makes it possible to suppress concentration unevenness of the compound A in the fiber raw material and to more uniformly introduce a phosphorus oxoacid group to the surface of the cellulose fiber contained in the fiber raw material. This is considered to be because it is possible to suppress attraction of the dissolved compound A to water molecules by surface tension and movement of the compound A to the surface of the fiber raw material in a similar manner (that is, occurrence of concentration unevenness of the compound A) when the water molecules move to the surface of the fiber raw material along with drying.

In addition, the heating device used for the heat treatment is preferably a device capable of constantly discharging moisture retained by a slurry and moisture generated in association with a dehydration condensation (phosphoric acid esterification) reaction between the compound A and a hydroxyl group or the like contained in a cellulose or the like in the fiber raw material to the outside of the device system. Examples of such a heating device include an air blowing type oven. By constantly discharging moisture in the device system, it is possible to suppress a hydrolysis reaction of a phosphoric acid ester bond, which is a reverse reaction of phosphoric acid esterification, and it is also possible to suppress acid hydrolysis of a sugar chain in the fiber. Therefore, it is possible to obtain a fine fibrous cellulose having a high axial ratio.

The time for the heat treatment is, for example, preferably 1 second or more and 300 minutes or less, more preferably 1 second or more and 1,000 seconds or less, still more preferably 10 seconds or more and 800 seconds or less after moisture is substantially removed from the fiber raw material. In the present embodiment, by setting the heating temperature and the heating time within appropriate ranges, the amount of phosphorus oxoacid groups introduced can be set within a preferable range.

The amount of phosphorus oxoacid groups introduced into the fiber raw material is, for example, preferably 0.05 mmol/g or more, more preferably 0.10 mmol/g or more, still more preferably 0.20 mmol/g or more, further still more preferably 0.50 mmol/g or more, and particularly preferably 1.00 mmol/g or more per 1 g (mass) of the fine fibrous cellulose. The amount of phosphorus oxoacid groups introduced into the fiber raw material is, for example, preferably 5.20 mmol/g or less, more preferably 3.65 mmol/g or less, and still more preferably 3.00 mmol/g or less per 1 g (mass) of the fine fibrous cellulose. By setting the amount of phosphorus oxoacid groups introduced within the above range, the fiber raw material can be easily refined, and the stability of the fine fibrous cellulose can be enhanced.

### -Carboxy group introduction step-

The carboxy group introduction step is performed by subjecting a cellulose-containing fiber raw material to an oxidation treatment such as ozone oxidation, oxidation by a Fenton process, or a TEMPO oxidation treatment, or a treatment with a compound having a carboxylic acid-derived group or derivatives thereof or an acid anhydride of a compound having a carboxylic acid-derived group or derivatives thereof.

The compound having a carboxylic acid-derived group is not particularly limited, and examples thereof include dicarboxylic acid compounds such as maleic acid, succinic acid, phthalic acid, fumaric acid, glutaric acid, adipic acid, and itaconic acid, and tricarboxylic acid compounds such as citric acid and aconitic acid. The derivative of the compound having a carboxylic acid-derived group is not particularly limited, and examples thereof include an imidized form of an acid anhydride of a compound having a carboxy group and a derivative of an acid anhydride of a compound having a carboxy group. The imidized form of an acid anhydride of a compound having a carboxy group is not particularly limited, and examples thereof include imidized forms of dicarboxylic acid compounds, such as maleimide, succinimide, and phthalimide.

The acid anhydride of a compound having a carboxylic acid-derived group is not particularly limited, and examples thereof include acid anhydrides of dicarboxylic acid compounds, such as maleic anhydride, succinic anhydride, phthalic anhydride, glutaric anhydride, adipic anhydride, and itaconic anhydride. In addition, the derivative of an acid anhydride of a compound having a carboxylic acid-derived group is not particularly limited, and examples thereof include those in which at least some hydrogen atoms of an acid anhydride of a compound having a carboxy group are substituted with a substituent such as an alkyl group or a phenyl group, such as dimethylmaleic anhydride, diethylmaleic anhydride, and diphenylmaleic anhydride.

When the TEMPO oxidation treatment is performed in the carboxy group introduction step, for example, the treatment is preferably performed under the condition of a pH of 6 or more and 8 or less. Such a treatment is also referred to as a neutral TEMPO oxidation treatment. The neutral TEMPO oxidation treatment can be performed, for example, by adding pulp as a fiber raw material, nitroxy radicals such as TEMPO (2,2,6,6-tetramethylpiperidine-1-oxyl) as a catalyst, and sodium hypochlorite as a sacrificial reagent to a sodium phosphate buffer solution (pH = 6.8). Furthermore, sodium chlorite is allowed to coexist in the reaction system, whereby aldehyde generated in the process of oxidation can be efficiently oxidized to a carboxy group.

The TEMPO oxidation treatment may also be performed under the condition of a pH of 10 or more and 11 or less. Such a treatment is also referred to as an alkali TEMPO oxidation treatment. The alkali TEMPO oxidation treatment can be performed, for example, by adding nitroxy radicals such as TEMPO as a catalyst, sodium bromide as a cocatalyst, and sodium hypochlorite as an oxidizing agent to pulp as a fiber raw material.

The amount of carboxy groups introduced into the fiber raw material varies depending on the type of the substituent, but for example, when the carboxy group is introduced by TEMPO oxidation, the amount of carboxy groups introduced is preferably 0.05 mmol/g or more, more preferably 0.10 mmol/g or more, still more preferably 0.20 mmol/g or more, further still more preferably 0.50 mmol/g or more, and particularly preferably 0.90 mmol/g or more per 1 g (mass) of the fine fibrous cellulose. In addition, the amount of carboxy groups introduced is preferably 3.65 mmol/g or less, more preferably 3.00 mmol/g or less, still more preferably 2.50 mmol/g or less, further still more preferably 2.20 mmol/g or less, and particularly preferably 2.00 mmol/g or less. In addition, when the substituent is a carboxymethyl group, the amount of carboxy groups introduced may be 5.8 mmol/g or less per 1 g (mass) of the fine fibrous cellulose. By setting the amount of carboxy groups introduced within the above range, it is possible to facilitate the refinement of the cellulose fiber in the refinement treatment step and to enhance the stability of the fine fibrous cellulose.

### -Sulfur oxoacid group introduction step-

The production process of the fine fibrous cellulose may include, for example, a sulfur oxoacid group introduction step as the ionic substituent introduction step. In the sulfur oxoacid group introduction step, a hydroxyl group of the cellulose-containing fiber raw material reacts with a sulfur oxoacid to obtain a cellulose fiber (sulfur oxoacid group-introduced fiber) having a sulfur oxoacid group.

In the sulfur oxoacid group introduction step, at least one compound (hereinafter, also referred to as "compound C") selected from compounds capable of introducing a sulfur oxoacid group by a reaction between the compound C and a hydroxyl group of the cellulose-containing fiber raw material is used instead of the compound A in <Phosphorus oxoacid group introduction step> described above. The compound C only needs to be a compound having a sulfur atom and capable of forming an ester bond with cellulose, and examples thereof include, but are not particularly limited to, sulfuric acid or a salt thereof, sulfurous acid or a salt thereof, and amidosulfuric acid. As the sulfuric acid, sulfuric acids having various purities can be used, and for example, 96% sulfuric acid (concentrated sulfuric acid) can be used. Examples of the sulfurous acid include 5% sulfurous acid solution. Examples of the sulfate or sulfite include a lithium salt, a sodium salt, a potassium salt, and an ammonium salt of a sulfate or sulfite, and these can have various degrees of neutralization. As the amidosulfuric acid, sulfamic acid or the like can be used. In the sulfur oxoacid group introduction step, the compound B in <Phosphorus oxoacid group introduction step> described above is preferably used in the same manner.

In the sulfur oxoacid group introduction step, it is preferable that an aqueous solution containing a sulfur oxoacid and urea and/or derivatives of urea is mixed with the cellulose raw material, and then the cellulose raw material is subjected to a heat treatment. As a heat treatment temperature, it is preferable to select a temperature at which a sulfur oxoacid group can be efficiently introduced while suppressing thermal decomposition and a hydrolysis reaction of a fiber. The heat treatment temperature is preferably 100°C or higher, more preferably 120°C or higher, and still more preferably 150°C or higher. The heat treatment temperature is preferably 300°C or lower, more preferably 250°C or lower, and still more preferably 200°C or lower.

In the heat treatment step, heating is preferably performed until moisture is substantially removed. Therefore, the heat treatment time varies depending on the amount of water contained in the cellulose raw material and the amount of the aqueous solution containing the sulfur oxoacid and urea and/or derivatives of urea added, but is preferably, for example, 10 seconds or more and 10,000 seconds or less. In the heat treatment, various devices having heat media can be used, and for example, a stirring and drying device, a rotary drying device, a disk drying device, a roll type heating device, a plate type heating device, a fluidized bed drying device, a band type drying device, a filtration drying device, a vibration fluidizing drying device, an airflow drying device, a reduced pressure drying device, an infrared heating device, a far infrared heating device, a microwave heating device, or a high frequency drying device can be used.

The amount of sulfur oxoacid groups introduced into the cellulose raw material is preferably 0.05 mmol/g or more, more preferably 0.10 mmol/g or more, still more preferably 0.20 mmol/g or more, further still more preferably 0.50 mmol/g or more, and particularly preferably 0.90 mmol/g or more. The amount of sulfur oxoacid groups introduced into the cellulose raw material is preferably 5.00 mmol/g or less, and more preferably 3.00 mmol/g or less. By setting the amount of sulfur oxoacid groups introduced within the above range, the fiber raw material can be easily refined, and the stability of the fibrous cellulose can be enhanced.

### -Oxidation step with chlorine-based oxidizing agent (second carboxy group introduction step)-

The ionic substituent introduction step may include an oxidation step with a chlorine-based oxidizing agent. In the oxidation step with a chlorine-based oxidizing agent, a carboxy group is introduced into the fiber raw material by adding the chlorine-based oxidizing agent to the fiber raw material having a hydroxyl group in a wet state or a dry state to perform a reaction.

Examples of the chlorine-based oxidizing agent include hypochlorous acid, hypochlorite, chlorous acid, chlorite, chloric acid, chlorate, perchloric acid, perchlorate, and chlorine dioxide. The chlorine-based oxidizing agent is preferably sodium hypochlorite, sodium chlorite, or chlorine dioxide from the viewpoint of introduction efficiency of the substituent, and further, defibration efficiency, cost, and ease of handling. When the chlorine-based oxidizing agent is added, the chlorine-based oxidizing agent may be added to the fiber raw material as it is as a reagent (in a solid form or liquid form), or may be added by being dissolved in an appropriate solvent.

The concentration of the chlorine-based oxidizing agent in the solution in the oxidation step with a chlorine-based oxidizing agent is, for example, preferably 1% by mass or more and 1,000% by mass or less, more preferably 5% by mass or more and 500% by mass or less, and still more preferably 10% by mass or more and 100% by mass or less in terms of the effective chlorine concentration. The amount of the chlorine-based oxidizing agent added to 100 parts by mass of the fiber raw material is preferably 1 part by mass or more and 100,000 parts by mass or less, more preferably 10 parts by mass or more and 10,000 parts by mass or less, and still more preferably 100 parts by mass or more and 5,000 parts by mass or less.

The reaction time with the chlorine-based oxidizing agent in the oxidation step with a chlorine-based oxidizing agent may vary depending on the reaction temperature, and is, for example, preferably 1 minute or more and 1,000 minutes or less, more preferably 10 minutes or more and 500 minutes or less, and still more preferably 20 minutes or more and 400 minutes or less. The pH during the reaction is preferably 5 or more and 15 or less, more preferably 7 or more and 14 or less, and still more preferably 9 or more and 13 or less. In addition, at the start of the reaction, it is preferable to keep the pH during the reaction constant (for example, pH 11) while appropriately adding hydrochloric acid or sodium hydroxide. After the reaction, excess reaction reagents, by-products, and the like may be washed with water, and removed by filtration or the like.

### -Xanthate group introduction step (xanthic acid esterification step)-

The ionic substituent introduction step may include, for example, a xanthate group introduction step (hereinafter, also referred to as "xanthation step"). In the xanthation step, a xanthate group is introduced into the fiber raw material by adding carbon disulfide and an alkali compound to the fiber raw material having a hydroxyl group in a wet state or a dry state to perform a reaction. Specifically, carbon disulfide is added to the fiber raw material which has been converted into alkali cellulose by the method described later, and the reaction is performed.

### ((Alkali cellulose conversion))

When an ionic substituent is introduced into the fiber raw material, it is preferable that an alkaline solution is allowed to act on a cellulose contained in the fiber raw material to convert the cellulose into alkali cellulose. By this treatment, some of the hydroxyl groups of the cellulose are ionically dissociated, and nucleophilicity (reactivity) can be enhanced. An alkali compound contained in the alkaline solution is not particularly limited, and may be an inorganic alkali compound or an organic alkali compound. For example, sodium hydroxide, potassium hydroxide, tetraethylammonium hydroxide, or tetrabutylammonium hydroxide is preferably used because of high versatility. The alkali cellulose conversion may be performed simultaneously with introduction of the ionic substituent, may be performed as a preceding stage thereof, or may be performed at both timings.

The solution temperature at the start of the alkali cellulose conversion is preferably 0°C or higher and 50°C or lower, more preferably 5°C or higher and 40°C or lower, and still more preferably 10°C or higher and 30°C or lower.

The alkali concentration in the alkaline solution is preferably 0.01 mol/L or more and 4 mol/L or less, more preferably 0.1 mol/L or more and 3 mol/L or less, and still more preferably 1 mol/L or more and 2.5 mol/L or less in terms of molar concentration. In particular, when the treatment temperature in the alkali cellulose conversion is lower than 10°C, the alkali concentration is preferably 1 mol/L or more and 2 mol/L or less.

The treatment time for the alkali cellulose conversion is preferably 1 minute or more, more preferably 10 minutes or more, and still more preferably 30 minutes or more. The alkali treatment time is preferably 6 hours or less, more preferably 5 hours or less, and still more preferably 4 hours or less.

By adjusting the type, treatment temperature, concentration, and immersion time of the alkaline solution as described above, it is possible to suppress permeation of the alkaline solution into a crystal region of a cellulose, to easily maintain a cellulose type I crystal structure, and to increase a yield of the fine fibrous cellulose.

When the introduction of the ionic substituent and the alkali cellulose conversion are not simultaneously performed, the alkali cellulose conversion is preferably performed before the introduction of the ionic substituent. In this case, the alkali cellulose obtained by the alkali cellulose conversion treatment is preferably subjected to solid-liquid separation by a general liquid removing method such as centrifugation or filtration to remove moisture. This improves reaction efficiency in the ionic substituent introduction step to be performed next. The cellulose fiber concentration after solid-liquid separation is preferably 5% or more and 50% or less, more preferably 10% or more and 40% or less, and still more preferably 15% or more and 35% or less.

### -Phosphonate group or phosphine group introduction step (phosphoalkylation step)-

The ionic substituent introduction step may include a phosphonate group or phosphine group introduction step (phosphoalkylation step). In the phosphoalkylation step, a phosphonate group or a phosphine group is introduced into the fiber raw material by adding a compound having a reactive group and a phospho group or a phosphine group (compound E_{A}) as an essential component, an alkali compound, and the above compound B selected from urea and derivatives thereof as optional components to a fiber raw material having a hydroxyl group in a wet state or a dry state to perform a reaction.

Examples of the reactive group include a halogenated alkyl group, a vinyl group, and an epoxy group (glycidyl group).

Examples of the compound E_{A} include vinylphosphonic acid, phenylvinylphosphonic acid, and phenylvinylphosphinic acid. The compound E_{A} is preferably vinylphosphonic acid from the viewpoint of introduction efficiency of the substituent, and further, defibration efficiency, cost, and ease of handling.

Furthermore, as an optional component, it is also preferable to use the compound B in <Phosphorus oxoacid group introduction step> described above in the same manner, and the amount of the compound B added is also preferably as described above.

When the compound E_{A} is added, the compound E_{A} may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound E_{A} added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 10 minutes or more and 500 minutes or less, and still more preferably 20 minutes or more and 400 minutes or less. After the reaction, excess reaction reagents, by-products, and the like may be washed with water, and removed by filtration or the like.

### -Sulfonic acid group introduction step (sulfoalkylation step)-

The ionic substituent introduction step may include a sulfonic acid group introduction step (sulfoalkylation step). In the sulfoalkylation, a sulfonic acid group is introduced into the fiber raw material by adding a compound having a reactive group and a sulfonic acid group (compound E_{B}) as an essential component, an alkali compound, and the above compound B selected from urea and derivatives thereof as optional components to a fiber raw material having a hydroxyl group in a wet state or a dry state to perform a reaction.

Examples of the reactive group include a halogenated alkyl group, a vinyl group, and an epoxy group (glycidyl group).

Examples of the compound E_{B} include sodium 2-chloroethanesulfonate, sodium vinylsulfonate, sodium p-styrenesulfonate, and 2-acrylamide-2-methylpropanesulfonic acid. Among them, the compound E_{B} is preferably sodium vinylsulfonate from the viewpoint of introduction efficiency of the substituent, and further, defibration efficiency, cost, and ease of handling.

Furthermore, as an optional component, it is also preferable to use the compound B in <Phosphorus oxoacid group introduction step> described above in the same manner, and the amount of the compound B added is also preferably as described above.

When the compound E_{B} is added, the compound E_{B} may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound E_{B} added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 10 minutes or more and 500 minutes or less, and still more preferably 15 minutes or more and 400 minutes or less. After the reaction, excess reaction reagents, by-products, and the like may be washed with water, and removed by filtration or the like.

### -Carboxyalkylation step (third carboxy group introduction step)-

The ionic substituent introduction step may include a carboxyalkylation step. A carboxy group is introduced into the fiber raw material by adding a compound having a reactive group and a carboxy group (compound E_{C}) as an essential component, an alkali compound, and the above compound B selected from urea and derivatives thereof as optional components to a fiber raw material having a hydroxyl group in a wet state or a dry state to perform a reaction.

Examples of the reactive group include a halogenated alkyl group, a vinyl group, and an epoxy group (glycidyl group).

The compound E_{C} is preferably monochloroacetic acid, sodium monochloroacetate, 2-chloropropionic acid, 3-chloropropionic acid, sodium 2-chloropropionate, and sodium 3-chloropropionate from the viewpoint of introduction efficiency of the substituent, and further, defibration efficiency, cost, and ease of handling.

Furthermore, as an optional component, it is also preferable to use the compound B in <Phosphorus oxoacid group introduction step> described above in the same manner, and the amount of the compound B added is also preferably as described above.

When the compound E_{C} is added, the compound E_{C} may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound E_{C} added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 3 minutes or more and 500 minutes or less, and still more preferably 5 minutes or more and 400 minutes or less. After the reaction, excess reaction reagents, by-products, and the like may be washed with water, and removed by filtration or the like.

### -Cationic group introduction step (cationization step)-

A cationic group is introduced into the fiber raw material by adding a compound having a reactive group and a cationic group (compound E_{D}) as an essential component, an alkali compound, and the above compound B selected from urea and derivatives thereof as optional components to the fiber raw material having a hydroxyl group in a wet state or a dry state to perform a reaction.

Examples of the reactive group include a halogenated alkyl group, a vinyl group, and an epoxy group (glycidyl group).

Examples of the cationic group include an ammonium group, a phosphonium group, and a sulfonium group. Among them, the cationic group is preferably an ammonium group.

The compound E_{D} is preferably glycidyltrimethylammonium chloride, 3-chloro-2-hydroxypropyltrimethylammonium chloride, and the like from the viewpoint of introduction efficiency of the substituent, and further, defibration efficiency, cost, and ease of handling.

Furthermore, it is also preferable to use the compound B in <Phosphorus oxoacid group introduction step> described above as an optional component. The amount of the compound B added is also preferably set as described above.

When the compound E_{D} is added, the compound E_{D} may be added to the fiber raw material as it is as a reagent (in a solid form or liquid form), or may be added by being dissolved in an appropriate solvent. The fiber raw material is preferably converted into alkali cellulose in advance or simultaneously with the reaction. The method of converting the fiber raw material into alkali cellulose is as described above.

The temperature during the reaction is, for example, preferably 50°C or higher and 300°C or lower, more preferably 100°C or higher and 250°C or lower, and still more preferably 130°C or higher and 200°C or lower.

The amount of the compound E_{D} added to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, and is, for example, preferably 1 minute or more and 1,000 minutes or less, more preferably 5 minutes or more and 500 minutes or less, and still more preferably 10 minutes or more and 400 minutes or less. After the reaction, excess reaction reagents, by-products, and the like may be washed with water, and removed by filtration or the like.

### (Washing step)

In the method for producing a fine fibrous cellulose in the present embodiment, an ionic substituent-introduced fiber can be subjected to a washing step as necessary. The washing step is performed by washing the ionic substituent-introduced fiber with, for example, water or an organic solvent. The washing step may be performed after steps described later, and the number of times of washing performed in each washing step is not particularly limited.

### (Alkali treatment (neutralization treatment) step)

When the fine fibrous cellulose is produced, the fiber raw material may be subjected to an alkali treatment (neutralization treatment) between the ionic substituent introduction step and a defibration treatment step described later. A method for the alkali treatment is not particularly limited, but examples thereof include a method for immersing an ionic substituent-introduced fiber in an alkaline solution.

An alkali compound contained in the alkaline solution is not particularly limited, and may be an inorganic alkali compound or an organic alkali compound. In the present embodiment, for example, sodium hydroxide or potassium hydroxide is preferably used as the alkali compound because of high versatility. A solvent contained in the alkaline solution may be either water or an organic solvent. Among these, the solvent contained in the alkaline solution is preferably a polar solvent including water or a polar organic solvent exemplified by an alcohol, or the like, and more preferably an aqueous solvent containing at least water. The alkaline solution is preferably, for example, a sodium hydroxide aqueous solution or a potassium hydroxide aqueous solution because of high versatility.

The temperature of the alkaline solution in the alkali treatment step is not particularly limited, but is, for example, preferably 5°C or higher and 80°C or lower, and more preferably 10°C or higher and 60°C or lower. The immersion time of the ionic substituent-introduced fiber in the alkaline solution in the alkali treatment step is not particularly limited, but is, for example, preferably 5 minutes or more and 30 minutes or less, and more preferably 10 minutes or more and 20 minutes or less. The amount of the alkaline solution used in the alkali treatment is not particularly limited, but is, for example, preferably 100% by mass or more and 100,000% by mass or less, and more preferably 1,000% by mass or more and 10,000% by mass or less with respect to the absolute dry mass of the ionic substituent-introduced fiber.

In order to reduce the amount of the alkaline solution used in the alkali treatment step, the ionic substituent-introduced fiber may be washed with water or an organic solvent after the ionic substituent introduction step and before the alkali treatment step. After the alkali treatment step and before the defibration treatment step, it is preferable to wash the ionic substituent-introduced fiber subjected to the alkali treatment with water or an organic solvent from the viewpoint of improving handleability.

### (Acid treatment step)

When the fine fibrous cellulose is produced, the fiber raw material may be subjected to an acid treatment between the ionic substituent introduction step and a defibration treatment step described later. For example, the ionic substituent introduction step, the acid treatment step, the alkali treatment step, and the defibration treatment step may be performed in this order.

A method for the acid treatment is not particularly limited, but examples thereof include a method for immersing the fiber raw material in an acidic solution containing an acid. The concentration of the acidic solution used is not particularly limited, but is, for example, preferably 10% by mass or less, and more preferably 5% by mass or less. The pH of the acidic solution used is not particularly limited, but is, for example, preferably 0 or more and 4 or less, and more preferably 1 or more and 3 or less. As the acid contained in the acidic solution, for example, an inorganic acid, a sulfonic acid, or a carboxylic acid can be used. Examples of the inorganic acid include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid include methanesulfonic acid, ethanesulfonic acid, benzenesulfonic acid, p-toluenesulfonic acid, and trifluoromethanesulfonic acid. Examples of the carboxylic acid include formic acid, acetic acid, citric acid, gluconic acid, lactic acid, oxalic acid, and tartaric acid. Among these, hydrochloric acid or sulfuric acid is particularly preferably used.

The temperature of the acid solution in the acid treatment is not particularly limited, but is, for example, preferably 5°C or higher and 100°C or lower, and more preferably 20°C or higher and 90°C or lower. The immersion time in the acid solution in the acid treatment is not particularly limited, but is for example, preferably 5 minutes or more and 120 minutes or less, and more preferably 10 minutes or more and 60 minutes or less. The amount of the acid solution used in the acid treatment is not particularly limited, but for example, is preferably 100% by mass or more and 100,000% by mass or less, and more preferably 1,000% by mass or more and 10,000% by mass or less with respect to the absolute dry mass of the fiber raw material.

### (Defibration treatment step)

The fine fibrous cellulose is obtained by subjecting the ionic substituent-introduced fiber to a defibration treatment in a defibration treatment step.

In the defibration treatment step, for example, a defibration treatment device can be used. The defibration treatment device is not particularly limited, but for example, a high-speed defibration machine, a grinder (stone mill pulverizer), a high-pressure homogenizer or an ultra-high pressure homogenizer, a high-pressure collision pulverizer, a ball mill, a bead mill, a disc refiner, a conical refiner, a twin screw kneader, a vibration mill, a homomixer under high-speed rotation, an ultrasonic disperser, a beater, or the like can be used. Among the above defibration treatment devices, it is more preferable to use a high-speed defibration machine, a high-pressure homogenizer, and an ultra-high pressure homogenizer which are less affected by grinding media and are less likely to cause contamination.

In the defibration treatment step, for example, the ionic substituent-introduced fiber is preferably diluted with a dispersion medium to form a slurry. As the dispersion medium, one or two or more selected from water and organic solvents such as a polar organic solvent can be used. The polar organic solvent is not particularly limited, but for example, alcohols, polyhydric alcohols, ketones, ethers, esters, and aprotic polar solvents are preferable. Examples of the alcohols include methanol, ethanol, isopropanol, n-butanol, and isobutyl alcohol. Examples of the polyhydric alcohols include ethylene glycol, propylene glycol, and glycerin. Examples of the ketones include acetone and methyl ethyl ketone (MEK). Examples of the ethers include diethyl ether, tetrahydrofuran, ethylene glycol monomethyl ether, ethylene glycol monoethyl ether, ethylene glycol mono-n-butyl ether, and propylene glycol monomethyl ether. Examples of the esters include ethyl acetate and butyl acetate. Examples of the aprotic polar solvent include dimethylsulfoxide (DMSO), dimethylformamide (DMF), dimethylacetamide (DMAc), and N-methyl-2-pyrrolidinone (NMP).

The solid content concentration of the fine fibrous cellulose during the defibration treatment can be appropriately set.

The slurry obtained by dispersing the phosphorus oxoacid group-introduced fiber in a dispersion medium may contain solids other than the phosphorus oxoacid group-introduced fiber, for example, urea having a hydrogen bonding property.

### (Nitrogen removal treatment)

The production process of the fine fibrous cellulose may further include a step of reducing the amount of nitrogen (nitrogen removal treatment step). By reducing the amount of nitrogen, a fine fibrous cellulose capable of further suppressing coloring can be obtained. The nitrogen removal treatment step is preferably provided before the defibration treatment step.

In the nitrogen removal treatment step, it is preferable to adjust the pH of the slurry containing the substituent-introduced fiber to 10 or more and to perform a heat treatment. In the heat treatment, the liquid temperature of the slurry is preferably 50°C or higher and 100°C or lower, and the heating time is preferably 15 minutes or more and 180 minutes or less. When the pH of the slurry containing the substituent-introduced fiber is adjusted, it is preferable to add an alkali compound that can be used in the alkali treatment step described above to the slurry.

After the nitrogen removal treatment step, the substituent-introduced fiber can be subjected to a washing step as necessary. The washing step is performed by washing the ionic substituent-introduced fiber with, for example, water or an organic solvent. The number of times of washing performed in each washing step is not particularly limited.

### (Substituent removal treatment)

The method for producing a fine fibrous cellulose may include a step of removing at least a part of the substituent from a fine fibrous cellulose having a substituent and a fiber width of 1,000 nm or less. Through such a step, it is also possible to obtain a fine fibrous cellulose that has a low amount of substituents introduced, but has a small fiber width. In the present specification, the step of removing at least a part of the substituent from the fine fibrous cellulose is also referred to as a substituent removal treatment step.

Examples of the substituent removal treatment step include a step of subjecting a fine fibrous cellulose having a substituent and a fiber width of 1,000 nm or less to a heat treatment, a step of subjecting the fine fibrous cellulose to an enzyme treatment, a step of subjecting the fine fibrous cellulose to an acid treatment, and a step of subjecting the fine fibrous cellulose to an alkali treatment. These treatments may be performed alone or in combination. Among them, the substituent removal treatment step is preferably a heat treatment step or an enzyme treatment step. Through the above treatment step, at least a part of the substituent is removed from the fine fibrous cellulose having a substituent and a fiber width of 1,000 nm or less, whereby a fine fibrous cellulose in which the amount of substituents introduced is less than 0.5 mmol/g can be obtained. By forming the fine fibrous cellulose-containing layer using such a fine fibrous cellulose, a laminate more excellent in water resistance is easily obtained.

The substituent removal treatment step is preferably performed in a slurry form. That is, the substituent removal treatment step is preferably a step of subjecting a slurry containing a fine fibrous cellulose having a substituent and a fiber width of 1,000 nm or less to a heat treatment, a step of subjecting the slurry to an enzyme treatment, a step of subjecting the slurry to an acid treatment, a step of subjecting the slurry to an alkali treatment, or the like. By performing the substituent removal treatment step in a slurry form, it is possible to prevent coloring substances generated by heating or the like during the substituent removal treatment, and added or generated acids, alkalis, salts, and the like from remaining in the fine fibrous cellulose. Thus, coloring of the fine fibrous cellulose-containing layer can be suppressed. In addition, when salts derived from the substituent removed after the substituent removal treatment are subjected to a removal treatment, it is also possible to increase the salt removal efficiency.

When a slurry containing a fine fibrous cellulose having a substituent and a fiber width of 1,000 nm or less is subjected to a substituent removal treatment, the concentration of the fine fibrous cellulose in the slurry is preferably 0.05% by mass or more and 20% by mass or less, more preferably 0.1% by mass or more, and still more preferably 0.2% by mass or more, and more preferably 15% by mass or less, and still more preferably 10% by mass or less. By setting the concentration of the fine fibrous cellulose in the slurry within the above range, the substituent removal treatment can be more efficiently performed. Furthermore, by setting the concentration of the fine fibrous cellulose in the slurry within the above range, it is possible to prevent coloring substances generated by heating or the like during the substituent removal treatment, and added or generated acids, alkalis, salts, and the like from remaining in the fine fibrous cellulose. Thus, coloring of the fine fibrous cellulose-containing layer can be suppressed. In addition, when salts derived from the substituent removed after the substituent removal treatment are subjected to a removal treatment, it is also possible to increase the salt removal efficiency.

When the substituent removal treatment step is a step of subjecting a fine fibrous cellulose having a substituent and a fiber width of 1,000 nm or less to a heat treatment, the heating temperature in the heat treatment step is preferably 40°C or higher and 250°C or lower, more preferably 50°C or higher, and still more preferably 60°C or higher, and more preferably 230°C or lower and still more preferably 200°C or lower. In particular, when the substituent of the fine fibrous cellulose to be subjected to the substituent removal treatment step is a phosphorus oxoacid group, the heating temperature in the heat treatment step is preferably 80°C or higher, more preferably 100°C or higher, and still more preferably 120°C or higher.

When the substituent removal treatment step is a heat treatment step, the heating device that can be used in the heat treatment step is not particularly limited, but a hot-air heating device, a steam heating device, an electric heating device, a hydrothermal heating device, a thermal heating device, an infrared heating device, a far infrared heating device, a microwave heating device, a high frequency heating device, a stirring and drying device, a rotary drying device, a disk drying device, a roll type heating device, a plate type heating device, a fluidized bed drying device, a band type drying device, a filtration drying device, a vibration fluidizing drying device, an airflow drying device, or a reduced pressure drying device can be used. From the viewpoint of preventing evaporation, heating is preferably performed in a sealed system, and from the viewpoint of further increasing the heating temperature, heating is preferably performed in a pressure-resistant device or container. The heat treatment may be a batch treatment, a batch continuous treatment, or a continuous treatment.

When the substituent removal treatment step is a step of subjecting a fine fibrous cellulose having a substituent and a fiber width of 1,000 nm or less to an enzyme treatment, a phosphate ester hydrolase, a sulfate ester hydrolase or the like is preferably used depending on the type of the substituent in the enzyme treatment step.

In the enzyme treatment step, it is preferable to add an enzyme so that the enzyme activity is 0.1 nkat or more, more preferably 1.0 nkat or more, and still more preferably 10 nkat or more with respect to 1 g of the fine fibrous cellulose. In addition, it is preferable to add an enzyme so that the enzyme activity is 100,000 nkat or less, more preferably 50,000 nkat or less, and still more preferably 10,000 nkat or less with respect to 1 g of the fine fibrous cellulose. After the enzyme is added to the fine fibrous cellulose dispersion (slurry), it is preferable to perform treatment for 1 minute or more and 100 hours or less under the condition of 0°C or higher and lower than 50°C.

After the enzyme reaction, a step of deactivating the enzyme may be provided. Examples of the method for deactivating the enzyme include a method in which an acid component or an alkali component is added to the slurry subjected to the enzyme treatment to deactivate the enzyme, and a method in which the temperature of the slurry subjected to the enzyme treatment is raised to 90°C or higher to deactivate the enzyme.

When the substituent removal treatment step is a step of subjecting a fine fibrous cellulose having a substituent and a fiber width of 1,000 nm or less to an acid treatment, in the acid treatment step, an acidic compound that can be used in the above acid treatment step is preferably added to the slurry.

When the substituent removal treatment step is a step of subjecting a fine fibrous cellulose having a substituent and a fiber width of 1,000 nm or less to an alkali treatment, in the alkali treatment step, an alkali compound that can be used in the above alkali treatment step is preferably added to the slurry.

In the substituent removal treatment step, it is preferable that the substituent removal reaction proceeds uniformly. In order to cause the reaction to proceed uniformly, for example, the slurry containing a fine fibrous cellulose may be stirred, or the specific surface area of the slurry may be increased. As a method for stirring the slurry, external mechanical shear may be given to the slurry, or self-stirring may be promoted by increasing the feeding speed of the slurry during the reaction.

In the substituent removal treatment step, spacer molecules may be added. The spacer molecules enter between adjacent fine fibrous celluloses, thereby acting as spacers for providing small spaces between the fine fibrous celluloses. In the substituent removal treatment step, by adding such spacer molecules, aggregation of fine fibrous celluloses after the substituent removal treatment can be suppressed. This makes it possible to more effectively enhance the transparency of the fine fibrous cellulose-containing layer.

The spacer molecule is preferably a water-soluble organic compound. Examples of the water-soluble organic compound include sugars, water-soluble polymers, and urea. Specific examples of the water-soluble organic compound include trehalose, urea, polyethylene glycol (PEG), polyethylene oxide (PEO), carboxymethyl cellulose, and polyvinyl alcohol (PVA). In addition, examples of the water-soluble organic compound that can be used include an alkyl methacrylate-acrylic acid copolymer, polyvinyl pyrrolidone, sodium polyacrylate, propylene glycol, dipropylene glycol, polypropylene glycol, isoprene glycol, hexylene glycol, 1,3-butylene glycol, polyacrylamide, xanthan gum, guar gum, tamarind gum, carrageenan, locust bean gum, quince seed, alginic acid, pullulan, carrageenan, pectin, starches such as cationized starch, raw starch, oxidized starch, etherified starch, esterified starch, and amylose, glycerin, diglycerin, polyglycerin, hyaluronic acid, and a metal salt of hyaluronic acid.

In addition, a known pigment can be used as the spacer molecule. Examples of the known pigment include kaolin (containing clay), calcium carbonate, titanium oxide, zinc oxide, amorphous silica (containing colloidal silica), aluminum oxide, zeolite, sepiolite, smectite, synthetic smectite, magnesium silicate, magnesium carbonate, magnesium oxide, diatomaceous earth, a styrene-based plastic pigment, hydrotalcite, a urea resin-based plastic pigment, and a benzoguanamine-based plastic pigment.

### (pH adjustment step)

When the above substituent removal treatment step is performed in a slurry form, a step of adjusting the pH of the slurry containing a fine fibrous cellulose may be provided before the substituent removal treatment step. For example, when an ionic substituent is introduced into the cellulose fiber and the counter ion of the ionic substituent is Na⁺, the slurry containing a fine fibrous cellulose after defibration exhibits weak alkalinity. When the slurry is heated in this state, a monosaccharide which is one of the coloring factors may be generated due to the decomposition of cellulose. Therefore, the pH of the slurry is preferably adjusted to 8 or less. In addition, since the monosaccharide may be generated also under acidic conditions, the pH of the slurry is preferably adjusted to 3 or more.

When the fine fibrous cellulose having a substituent is a fine fibrous cellulose having a phosphoric acid group, the phosphorus of the phosphoric acid group is preferably in a state of being susceptible to nucleophilic attack from the viewpoint of improving the removal efficiency of the substituent. The state in which the phosphorus of the phosphate group is susceptible to nucleophilic attack is a state in which the degree of neutralization is 1 represented by cellulose -O-P(=O)(-O-H⁺)(-O-Na⁺). In order to achieve this state, the pH of the slurry is preferably adjusted to 3 or more and 8 or less, and more preferably 4 or more and 6 or less.

The means for adjusting the pH is not particularly limited, but for example, an acid component or an alkali component may be added to the slurry containing a fine fibrous cellulose. The acid component may be either an inorganic acid or an organic acid, and examples of the inorganic acid include sulfuric acid, hydrochloric acid, nitric acid, and phosphoric acid. Examples of the organic acid include formic acid, acetic acid, citric acid, malic acid, lactic acid, adipic acid, sebacic acid, stearic acid, maleic acid, succinic acid, tartaric acid, fumaric acid, and gluconic acid. The alkali component may be an inorganic alkali compound or an organic alkali compound. Examples of the inorganic alkali compound include lithium hydroxide, sodium hydroxide, potassium hydroxide, lithium carbonate, lithium hydrogen carbonate, potassium carbonate, potassium hydrogen carbonate, sodium carbonate, and sodium hydrogen carbonate. Examples of the organic alkali compound include ammonia, hydrazine, methylamine, ethylamine, diethylamine, triethylamine, propylamine, dipropylamine, butylamine, diaminoethane, diaminopropane, diaminobutane, diaminopentane, diaminohexane, cyclohexylamine, aniline, tetramethylammonium hydroxide, tetraethylammonium hydroxide, tetrapropylammonium hydroxide, tetrabutylammonium hydroxide, benzyltrimethylammonium hydroxide, pyridine, and N,N-dimethyl-4-aminopyridine.

In the pH adjustment step, an ion exchange treatment may be performed to adjust the pH. In the ion exchange treatment, a strongly acidic cation exchange resin or a weakly acidic ion exchange resin can be used. By treating the slurry with an appropriate amount of cation exchange resin for a sufficient time, a slurry containing a fine fibrous cellulose having a desired pH can be obtained. Furthermore, in the pH adjustment step, addition of an acid component or an alkali component may be combined with an ion exchange treatment.

### (Salt removal treatment)

After the substituent removal treatment step, it is preferable to perform a treatment of removing salts derived from the removed substituent. By removing the salts derived from the substituent, it becomes easy to obtain a fine fibrous cellulose capable of suppressing coloring. The means for removing the salts derived from the substituent is not particularly limited, and examples thereof include a washing treatment and an ion exchange treatment. The washing treatment is performed, for example, by washing the fine fibrous cellulose aggregated by the substituent removal treatment with water or an organic solvent. In the ion exchange treatment, an ion exchange resin can be used.

### (Uniform dispersion treatment)

After the substituent removal treatment step, a step of uniformly dispersing the fine fibrous cellulose obtained through the substituent removal treatment may be provided. By subjecting the fine fibrous cellulose to the substituent removal treatment, at least a part of the fine fibrous cellulose is aggregated. The uniform dispersion treatment step is a step of uniformly dispersing the fine fibrous cellulose aggregated as described above.

In the uniform dispersion treatment step, for example, a high-speed defibration machine, a grinder (stone mill pulverizer), a high-pressure homogenizer, a high-pressure collision pulverizer, a ball mill, a bead mill, a disc refiner, a conical refiner, a twin screw kneader, a vibration mill, a homomixer under high-speed rotation, an ultrasonic disperser, a beater, or the like can be used. Among the above uniform dispersion treatment devices, it is more preferable to use a high-speed defibration machine and a high-pressure homogenizer.

The treatment conditions in the uniform dispersion treatment step are not particularly limited, but it is preferable to increase the maximum moving speed of the fine fibrous cellulose during the treatment and the pressure applied during the treatment. In the high-speed defibration machine, the peripheral speed is preferably 20 m/sec or more, more preferably 25 m/sec or more, and still more preferably 30 m/sec or more. The high-pressure homogenizer can be more preferably used than the high-speed defibration machine because the maximum moving speed of the fine fibrous cellulose during the treatment and the pressure applied during the treatment increase. In the high-pressure homogenizer treatment, the pressure during the treatment is preferably 1 MPa or more and 350 MPa or less, more preferably 10 MPa or more and 300 MPa or less, and still more preferably 50 MPa or more and 250 MPa or less.

In the uniform dispersion treatment step, the above spacer molecules may be newly added. In the uniform dispersion treatment step, by adding such spacer molecules, uniform dispersion of the fine fibrous cellulose can be more smoothly performed. This makes it possible to more effectively enhance the transparency of the fine fibrous cellulose-containing layer.

In the fine fibrous cellulose-containing layer in the present embodiment, the content of the fine fibrous cellulose in the fine fibrous cellulose-containing layer 1A on the core resin plate side and the content of the fine fibrous cellulose in the fine fibrous cellulose-containing layer 2A are preferably 30% by mass or more and 90% by mass or less, more preferably 55% by mass or more, still more preferably 60% by mass or more, and further still more preferably 65% by mass or more, and more preferably 85% by mass or less, still more preferably 80% by mass or less, and further still more preferably 75% by mass or less from the viewpoint of improving the strength of the laminate.

In addition, the content of the fine fibrous cellulose in the fine fibrous cellulose-containing layer 1B on the resin film side and the content of the fine fibrous cellulose in the fine fibrous cellulose-containing layer 2B are preferably 5% by mass or more and 90% by mass or less, more preferably 10% by mass or more, and more preferably 85% by mass or less, still more preferably 80% by mass or less, and further still more preferably 75% by mass or less from the viewpoint of adhesiveness to the resin film.

In the present embodiment, as the fine fibrous cellulose, a fine fibrous cellulose containing an ionic group and an unmodified fine fibrous cellulose may be used in combination.

In addition to the fine fibrous cellulose, a coarse cellulose fiber having a fiber width of more than 1 µm may be contained. In the following description, fine fibrous cellulose and coarse cellulose fiber are also collectively referred to as "cellulose fiber".

The fiber width of the coarse cellulose fiber is not particularly limited as long as it is 1 µm or more, but is, for example, preferably 1 µm or more and 100 µm or less, more preferably 5 µm or more, still more preferably 10 µm or more, and more preferably 50 µm or less and still more preferably 40 µm or less. The fiber width of the coarse cellulose fiber can be measured by a fiber length distribution measuring apparatus (for example, FS5, manufactured by Valmet Corporation, and L&W Fiber Tester Plus, manufactured by ABB Ltd.).

The coarse cellulose fiber may have an ionic substituent from the viewpoint of improving dispersibility in the fine fibrous cellulose-containing layer. A preferred embodiment of the ionic substituent is the same as that of the fine fibrous cellulose, and the type and a preferred range of the amount of substituents are also the same.

The coarse cellulose fiber is preferably obtained by introducing an ionic group into a fiber raw material and then moderately defibrating the fiber raw material. Examples of the defibration machine used for the moderate defibration treatment include refiners such as a disc refiner and a conical refiner.

When the coarse cellulose fiber is contained, a preferred content of the fine fibrous cellulose in the fine fibrous cellulose-containing layer described above is a preferred range of the total content of the fibrous cellulose, that is, the fine fibrous cellulose and the coarse cellulose fiber.

When the coarse cellulose fiber is contained, the content of the coarse cellulose fiber based on 100 parts by mass of the fibrous cellulose (total of the fine fibrous cellulose and the coarse cellulose fiber) is preferably 1 part by mass or more and 80 parts by mass or less, more preferably 3 parts by mass or more, and still more preferably 5 parts by mass or more, and preferably 60 parts by mass or less, more preferably 40 parts by mass or less, and still more preferably 20 parts by mass or less.

When the content of the coarse cellulose fiber is within the above range, the coarse cellulose fiber can be produced at a lower cost than the fine fibrous cellulose, and thus the laminate can be produced at a lower cost.

### <Hydrophilic polymer>

The fine fibrous cellulose-containing layer in the present embodiment contains a hydrophilic polymer from the viewpoint of ease of production of the fine fibrous cellulose-containing layer and the viewpoint of adhesiveness of the laminate. The hydrophilic polymer is generally a polymer compound that is easily dissolved in water, swollen, or wetted. Examples of the hydrophilic polymer include a polymer compound having an ionic group such as a carboxy group, a sulfonic acid group, or an amino group, and a polymer compound having a nonionic hydrophilic group such as a hydroxyl group, an amide group, an ether group, a polyoxyethylene group, or a polyoxypropylene group in the molecular structure.

Examples of the hydrophilic polymer include a carboxyvinyl polymer; polyvinyl alcohol; an alkyl methacrylate-acrylic acid copolymer; polyvinyl pyrrolidone; a polyvinyl methyl ether; polyacrylates such as sodium polyacrylate; an alkyl acrylate ester copolymer; a urethane-based copolymer; a modified polyester; a modified polyimide; polyalkylene glycols such as polyethylene glycol, polyethylene oxide, and polypropylene glycol; polycations such as polyacrylamide and polyethyleneimine; polyanions; amphoteric polymers; polysaccharide thickeners such as xanthan gum, guar gum, tamarind gum, carrageenan, locust bean gum, quince seed, alginic acid, metal salts of alginic acid, pullulan, sacran, and pectin; cellulose derivatives exemplified by carboxymethyl cellulose, carboxyethyl cellulose, methyl cellulose, hydroxypropyl methylcellulose, hydroxyethyl methyl cellulose, and hydroxyethyl cellulose; starches exemplified by cationized starch, raw starch, oxidized starch, etherified starch, esterified starch, dextrin, and amylose; glycerins such as polyglycerin; hyaluronic acid, metal salts of hyaluronic acid; and proteins such as casein. In addition, a copolymer of these hydrophilic polymers may be used.

In the present embodiment, the fine fibrous cellulose-containing layer 1A on the core resin plate side contains the hydrophilic polymer 1A, and the fine fibrous cellulose-containing layer 2A contains the hydrophilic polymer 2A.

Furthermore, the fine fibrous cellulose-containing layer 1B on the resin film side contains the hydrophilic polymer 1B, and the fine fibrous cellulose-containing layer 2B contains the hydrophilic polymer 2B.

Here, the hydrophilic polymer 1A and the hydrophilic polymer 1B have a hydroxyl group, and when the hydroxyl value of the hydrophilic polymer 1A is defined as OHV_1A (mgKOH/g) and the hydroxyl value of the hydrophilic polymer 1B is defined as OHV_1B (mgKOH/g), the following expression (I) is satisfied. $OHV_ 1 A < OHV_ 1 B$ (I)

Preferably, the hydrophilic polymer 2A and the hydrophilic polymer 2B have a hydroxyl group, and when the hydroxyl value of the hydrophilic polymer 2A is defined as OHV_2A (mgKOH/g) and the hydroxyl value of the hydrophilic polymer 2B is defined as OHV_2B (mgKOH/g), the following expression (I') is satisfied. $OHV_ 2 A < OHV_ 2 B$ (I')

That is, the hydroxyl value of the hydrophilic polymer contained in the fine fibrous cellulose-containing layer on the resin film side is preferably larger than the hydroxyl value of the hydrophilic polymer contained in the fine fibrous cellulose-containing layer on the core resin plate side. By adopting the above configuration, adhesiveness between the fine fibrous cellulose-containing layer and the adhesive layer 1B or 2B is improved, and peeling of the laminate is suppressed, which is preferable.

The hydrophilic polymers 1A and 2A are preferably nonionic water-soluble cellulose ethers. The nonionic water-soluble cellulose ether is preferable in that a laminate having high transparency and excellent strength can be obtained. The term "water-soluble" means that 1 g or more is dissolved in 100 g of water at an arbitrary temperature of 0°C or higher and 100°C or lower. The "polymer" means that the average molecular weight (weight average molecular weight in the case of having molecular weight distribution) is 1,000 or more, preferably 1,500 or more, and more preferably 2,000 or more.

The nonionic water-soluble cellulose ether preferably has at least one functional group selected from an alkoxy group and a hydroxyalkyl group. The number of carbon atoms of the alkoxy group and the hydroxyalkyl group is preferably 1 or more and 6 or less, more preferably 1 or more and 4 or less, and still more preferably 1 or more and 3 or less. Examples of such a functional group include a methoxy group, an ethoxy group, a propoxy group, a hydroxyethyl group, and a hydroxypropyl group.

Specific examples of the nonionic water-soluble cellulose ether include methyl cellulose, ethyl cellulose, propyl cellulose, hydroxyethyl cellulose, hydroxyethyl methyl cellulose, hydroxypropyl cellulose, and hydroxypropyl methylcellulose.

As the nonionic water-soluble cellulose ether, a commercially available product may be appropriately selected and used, and hydroxyethyl cellulose is commercially available as HEC SE series (for example, SE400, SE600, SE850, SE900) from Daicel Chemical Industries, Ltd., and methyl cellulose is commercially available as METOLOSE SM series from Shin-Etsu Chemical Co., Ltd., and Marborose series from Matsumoto Yushi-Seiyaku Co., Ltd. Hydroxypropyl cellulose is commercially available as NISSO HPC series from Nippon Soda Co., Ltd., hydroxypropyl methylcellulose as METOLOSE 60SH, METOLOSE 65SH, and METOLOSE 90SH series from Shin-Etsu Chemical Co., Ltd., and hydroxyethyl methyl cellulose as METOLOSE SEB and METOLOSE SNB series from Shin-Etsu Chemical Co., Ltd.

The degree of substitution of the alkoxy group and/or the hydroxyalkyl group may be appropriately selected according to a desired hydroxyl value to be described later.

In the present embodiment, among these, hydroxypropyl methylcellulose is preferable as the hydrophilic polymers 1A and 2A. The degree of substitution of the methoxy group is preferably 1.0 or more and 2.5 or less, more preferably 1.2 or more, still more preferably 1.4 or more, and further still more preferably 1.6 or more, and more preferably 2.4 or less, still more preferably 2.2 or less, and further still more preferably 2.0 or less. The number of moles of substitution (average number of moles of hydroxypropoxy groups added per unit anhydroglucose of cellulose) of the hydroxypropoxy group is preferably 0.05 mol or more and 1.00 mol or less, more preferably 0.08 mol or more, still more preferably 0.10 mol or more, and further still more preferably 0.12 mol or more, and more preferably 0.80 mol or less, still more preferably 0.60 mol or less, further still more preferably 0.40 mol or less, and yet more preferably 0.30 mol or less.

The hydrophilic polymers 1B and 2B are preferably polyvinyl alcohol having a degree of saponification of 80 or more or a modified product thereof. The polyvinyl alcohol having a degree of saponification of 80 or more or a modified product thereof has a high hydroxyl value, and provides a laminate excellent in adhesiveness to the adhesive layer 1B and the adhesive layer 2B.

The modified product of polyvinyl alcohol (hereinafter, also referred to as modified polyvinyl alcohol) is not particularly limited, and examples thereof include polyvinyl alcohol modified with a hydrophilic functional group and polyvinyl alcohol modified with a hydrophobic functional group, and polyvinyl alcohol modified with a hydrophilic functional group is preferable.

Examples of the hydrophilic functional group include an acetyl group, a carboxy group, a sulfo group, a phosphoric acid group, a phosphonate group, an acetoacetyl group, a polyalkylene oxide group, and a polypropylene oxide group.

Examples of the hydrophobic functional group include alkyl groups such as an ethylene group and a propylene group.

Among them, acetoacetyl group-modified polyvinyl alcohol is preferable from the viewpoint of transparency and strength. The acetoacetyl group-modified polyvinyl alcohol is preferable because the crosslinking reaction proceeds even under mild conditions, and as a result, good adhesiveness can be exhibited.

The degree of saponification of polyvinyl alcohol and modified polyvinyl alcohol is preferably 80 or more, more preferably 85 or more, still more preferably 90 or more, further still more preferably 95 or more, and yet more preferably 97 or more, and the upper limit thereof is not particularly limited and is 100 or less from the viewpoint of obtaining a high hydroxyl value.

The hydroxyl value of each of the hydrophilic polymers 1A and 2A is preferably 50 mgKOH/g or more and 500 mgKOH/g or less, more preferably 100 mgKOH/g or more, more preferably 250 mgKOH/g or more, and still more preferably 300 mgKOH/g or more, and more preferably 450 mgKOH/g or less and still more preferably 400 mgKOH/g or less from the viewpoint of adhesiveness to the adhesive layer 1A and the adhesive layer 2A and from the viewpoint of obtaining a preferable difference from the hydroxyl value of the hydrophilic polymers 1B and 2B.

The hydroxyl value of each of the hydrophilic polymers 1B and 2B is preferably 900 mgKOH/g or more and 1,273 mgKOH/g or less, more preferably 950 mgKOH/g or more, still more preferably 1,000 mgKOH/g or more, further still more preferably 1,100 mgKOH/g or more, and yet more preferably 1,200 mgKOH/g or more, and preferably 1,270 mgKOH/g or less from the viewpoint of adhesiveness to the adhesive layer 1B and the adhesive layer 2B and from the viewpoint of obtaining a preferable difference from the hydroxyl value of the hydrophilic polymers 1A and 2A.

The difference between OHV_1B (mgKOH/g), which is a hydroxyl value of the hydrophilic polymer 1B, and OHV_1A (mgKOH/g), which is a hydroxyl value of the hydrophilic polymer 1A, preferably satisfies the following expression (II). $1200 mgKOH / g \geq OHV_ 1 B - OHV_ 1 A \geq 450 mgKOH / g$ (II)

The difference between OHV_1B and OHV_1A (OHV_1B - OHV_1A) is more preferably 1100 mgKOH/g or less, still more preferably 1,000 mgKOH/g or less, and further still more preferably 950 mgKOH/g or less, and more preferably 500 mgKOH/g or more, still more preferably 550 mgKOH/g or more, and further still more preferably 600 mgKOH/g or more.

When the difference between the hydroxyl value of the hydrophilic polymer 1B and the hydroxyl value of the hydrophilic polymer 1A is within the above range, the toughness of the fine fibrous cellulose-containing layer is excellent, the adhesiveness between the adhesive layer 1B and the fine fibrous cellulose-containing layer 1B is excellent, and the adhesiveness between the fine fibrous cellulose-containing layer 1A and the fine fibrous cellulose-containing layer 1B is also excellent, which is preferable.

The difference between the hydroxyl value of the hydrophilic polymer 1B and the hydroxyl value of the hydrophilic polymer 1A can be adjusted to fall within a desired range by selecting an appropriate hydrophilic polymer. For example, when polyvinyl alcohol or modified polyvinyl alcohol having a high degree of saponification is used as the hydrophilic polymer 1B, a high hydroxyl value can be obtained. In addition, when a nonionic water-soluble cellulose having a high degree of substitution of the alkoxy group is used as the hydrophilic polymer 1A, the hydroxyl value tends to decrease, and when a nonionic water-soluble cellulose having a high degree of substitution of the hydroxyalkyl group is used, the hydroxyl value tends to decrease.

The difference between OHV_2B (mgKOH/g), which is a hydroxyl value of the hydrophilic polymer 2B, and OHV_2A (mgKOH/g), which is a hydroxyl value of the hydrophilic polymer 2A, preferably satisfies the following expression (II'). $1200 mgKOH / g \geq OHV_ 2 B - OHV_ 2 A \geq 450 mgKOH / g$ (II')

The difference between OHV_2B and OHV_2A (OHV_2B - OHV_2A) is more preferably 1100 mgKOH/g or less, still more preferably 1,000 mgKOH/g or less, and further still more preferably 950 mgKOH/g or less, and more preferably 500 mgKOH/g or more, still more preferably 550 mgKOH/g or more, and further still more preferably 600 mgKOH/g or more.

When the difference between the hydroxyl value of the hydrophilic polymer 2B and the hydroxyl value of the hydrophilic polymer 2A is within the above range, the adhesiveness between the adhesive layer 2A and the fine fibrous cellulose-containing layer 2A is excellent, the adhesiveness between the adhesive layer 2B and the fine fibrous cellulose-containing layer 2B is excellent, and the adhesiveness between the fine fibrous cellulose-containing layer 2A and the fine fibrous cellulose-containing layer 2B is also excellent, which is preferable.

The difference between the hydroxyl value of the hydrophilic polymer 2B and the hydroxyl value of the hydrophilic polymer 2A can be adjusted to fall within a desired range by selecting an appropriate hydrophilic polymer. For example, when polyvinyl alcohol or modified polyvinyl alcohol having a high degree of saponification is used as the hydrophilic polymer 2B, a high hydroxyl value can be obtained. In addition, when a nonionic water-soluble cellulose having a high degree of substitution of the alkoxy group is used as the hydrophilic polymer 2A, the hydroxyl value tends to decrease, and when a nonionic water-soluble cellulose having a high degree of substitution of the hydroxyalkyl group is used, the hydroxyl value tends to decrease.

In the fine fibrous cellulose-containing layer in the present embodiment, the content of the hydrophilic polymer 1A in the fine fibrous cellulose-containing layer 1A on the core resin plate side and the content of the hydrophilic polymer 2A in the fine fibrous cellulose-containing layer 2A are preferably 10% by mass or more and 70% by mass or less, more preferably 15% by mass or more, still more preferably 20% by mass or more, and further still more preferably 25% by mass or more, and more preferably 45% by mass or less, still more preferably 40% by mass or less, and further still more preferably 35% by mass or less from the viewpoint of improvement of adhesiveness and film formability.

The content of the hydrophilic polymer 1B in the fine fibrous cellulose-containing layer 1B on the resin film side and the content of the hydrophilic polymer 2B in the fine fibrous cellulose-containing layer 2B are preferably 10% by mass or more and 95% by mass or less, more preferably 15% by mass or more, still more preferably 20% by mass or more, and further still more preferably 25% by mass or more, and more preferably 90% by mass or less from the viewpoint of adhesiveness to the resin film.

In the fine fibrous cellulose-containing layer in the present embodiment, the total of the content of the fine fibrous cellulose and the content of the hydrophilic polymer in the solid content of the fine fibrous cellulose-containing layer is preferably 80% by mass or more, more preferably 85% by mass or more, still more preferably 90% by mass or more, and further still more preferably 95% by mass or more, and 100% by mass or less from the viewpoint of improving the rigidity of the laminate.

In the laminate of the present embodiment, the "content (%) of the fine fibrous cellulose-containing layer" (100 × total thickness (µm) of fine fibrous cellulose-containing layer 1 (fine fibrous cellulose-containing layer 1A and fine fibrous cellulose-containing layer 1B) and fine fibrous cellulose-containing layer 2 (fine fibrous cellulose-containing layer 2A and fine fibrous cellulose-containing layer 2B)/thickness of laminate (µm)) is preferably 16.0% or less, more preferably 14.0% or less, still more preferably 12.0% or less, and further still more preferably 10.0% or less, and preferably 0.6% or more, more preferably 0.9% or more, still more preferably 1.2% or more, and further still more preferably 1.5% or more from the viewpoint of improving the strength of the laminate.

### <Other components>

The fine fibrous cellulose-containing layer in the present embodiment may contain components other than the fine fibrous cellulose having a fiber width of 1,000 nm or less and the hydrophilic polymer (other components). Examples of the other components include the above-described fibrous cellulose having a fiber width of more than 1,000 nm, a hydrophilic low molecular weight substance, a paper strength enhancer, a thermoplastic resin, a surfactant, an organic ion, a coupling agent, an inorganic layered compound, an inorganic compound, a leveling agent, an antiseptic, an antifoaming agent, organic particles, a lubricant, an antistatic agent, an ultraviolet protecting agent, a dye, a pigment, a stabilizer, a magnetic powder, an orientation accelerator, a plasticizer, a dispersant, a coloring inhibitor, a polymerization inhibitor, a pH adjuster, and a crosslinking agent.

In the fine fibrous cellulose-containing layer in the present embodiment, the total content of "other components" in the solid content of the fine fibrous cellulose-containing layer can be, for example, 5% by mass or less, 3% by mass or less, 1% by mass or less, or 0% by mass.

### <Thickness>

The thickness of the fine fibrous cellulose-containing layer 1 in the present embodiment, that is, the total thickness of the fine fibrous cellulose-containing layer 1A and the fine fibrous cellulose-containing layer 1B is preferably 20 µm or more and 300 µm or less, more preferably 25 µm or more, and still more preferably 30 µm or more, and more preferably 250 µm or less and still more preferably 200 µm or less. The preferred range of the thickness of the fine fibrous cellulose-containing layer 2 in the present embodiment is the same as the above range of the thickness.

The thickness of the fine fibrous cellulose-containing layer is preferably appropriately adjusted according to the application of the laminate.

The ratio of the thickness of the fine fibrous cellulose-containing layer 1A to the thickness of the fine fibrous cellulose-containing layer 1B (fine fibrous cellulose-containing layer 1A : fine fibrous cellulose-containing layer 1B) is preferably more than 5.0 : 5.0 and 9.0 : 1.0 or less, more preferably 5.5 : 4.5 or more, still more preferably 6.0 : 4.0 or more, and further still more preferably 6.5 : 3.5 or more, and more preferably 8.5 : 1.5 or less, still more preferably 8.0 : 2.0 or less, and further still more preferably 7.5 : 2.5 or less from the viewpoint of obtaining a laminate excellent in strength and adhesiveness.

By making the thickness of the fine fibrous cellulose-containing layer 1A thicker than that of the fine fibrous cellulose-containing layer 1B, a laminate excellent in strength and transparency can be obtained, which is preferable. In addition, the thickness of the fine fibrous cellulose-containing layer 1B is preferably in the above-described range from the viewpoint of improving adhesiveness to the adhesive layer 1B.

The preferred range of the ratio of the thickness of the fine fibrous cellulose-containing layer 2A to the thickness of the fine fibrous cellulose-containing layer 2B in the present embodiment is the same as the above range.

### <Basis weight>

The basis weight of the fine fibrous cellulose-containing layer 1 in the present embodiment, that is, the total of the basis weight of the fine fibrous cellulose-containing layer 1A and the basis weight of the fine fibrous cellulose-containing layer 1B is preferably 25 g/m² or more and 400 g/m² or less, more preferably 30 g/m² or more, still more preferably 35 g/m² or more, and further still more preferably 40 g/m² or more, and more preferably 300 g/m² or less, still more preferably 200 g/m² or less, and further still more preferably 100 g/m² or less. The preferred range of the basis weight of the fine fibrous cellulose-containing layer 2 in the present embodiment is the same as the above range of the basis weight.

The basis weight of the fine fibrous cellulose-containing layer is preferably appropriately adjusted according to the application of the laminate.

### <Density>

The density of the fine fibrous cellulose-containing layer 1 in the present embodiment is preferably 0.6 g/cm³ or more and 2.5 g/cm³ or less, more preferably 0.8 g/cm³ or more, still more preferably 1.0 g/cm³ or more, and further still more preferably 1.2 g/cm³ or more, and more preferably 2.0 g/cm³ or less, still more preferably 1.8 g/cm³ or less, and further still more preferably 1.6 g/cm³ or less. The preferred range of the density of the fine fibrous cellulose-containing layer 2 in the present embodiment is the same as the above range of the density.

The density of the fine fibrous cellulose-containing layer is calculated by dividing the basis weight of the fine fibrous cellulose-containing layer by the thickness.

### [Resin films 1 and 2]

As described above, the laminate of the present embodiment preferably has the resin film 1 on the surface of the adhesive layer 1B of the laminated sheet opposite to the surface having the fine fibrous cellulose-containing layer 1B, preferably has the core resin plate on the surface of the adhesive layer 1A opposite to the surface having the fine fibrous cellulose-containing layer 1A, preferably has the laminated sheet on the side of the core resin plate opposite to the surface having the adhesive layer 1A such that the adhesive layer 2A is in contact with the core resin plate, and preferably has the resin film 2 on the surface of the adhesive layer 2B of the laminated sheet opposite to the surface having the fine fibrous cellulose-containing layer 2B. The components that are contained and the components that can be contained in the resin film 1, and the thickness of the resin film 1, the components that are contained and the components that can be contained in the resin film 2, and the thickness of the resin film 2 may be the same or different, but are preferably the same.

Hereinafter, the resin films 1 and 2 are also collectively referred to simply as "resin film".

The resin constituting the resin film preferably contains at least one selected from the group consisting of polycarbonate and polyethylene terephthalate, more preferably contains polycarbonate or polyethylene terephthalate, and still more preferably contains polycarbonate.

The content of polycarbonate and polyethylene terephthalate in the resin constituting the resin film is preferably 85% by mass or more, more preferably 90% by mass or more, still more preferably 95% by mass or more, and 100% by mass or less in total.

### <Thickness>

The thickness of the resin film 1 in the present embodiment is preferably 30 µm or more and 500 µm or less, more preferably 80 µm or more, still more preferably 120 µm or more, and further still more preferably 160 µm or more, and more preferably 450 µm or less, still more preferably 400 µm or less, further still more preferably 350 µm or less, and yet more preferably 300 µm or less. The preferred range of the thickness of the resin film 2 in the present embodiment is the same as the above range of the thickness.

The thickness of the resin film is preferably appropriately adjusted according to the application of the laminate.

### [Characteristics of laminate]

### [Total light transmittance]

The total light transmittance of the laminate of the present embodiment is preferably 80% or more, more preferably 83% or more, and still more preferably 85% or more. On the other hand, the upper limit value of the total light transmittance of the laminate may be, for example, 100%. The total light transmittance of the laminate can be controlled by the fiber width of the fine fibrous cellulose, the type of the ionic group, the amount of ionic groups introduced, the type of the hydrophilic polymer, the type of the resin constituting the resin film, the contents of the fine fibrous cellulose and the hydrophilic polymer in the fine fibrous cellulose-containing layer, the thickness of each layer constituting the laminate, and the like.

The total light transmittance of the laminate is a value measured in accordance with JIS K 7361-1:1997.

### [Haze]

The haze of the laminate of the present embodiment is preferably 6.0% or less, more preferably 5.0% or less, still more preferably 4.0% or less, further still more preferably 3.0% or less, yet more preferably 2.0% or less, and still even more preferably 1.0% or less. The lower limit value of the haze of the laminate may be, for example, 0%. The haze of the laminate can be controlled by the fiber width of the fine fibrous cellulose, the type of the ionic group, the amount of ionic groups introduced, the type of the hydrophilic polymer, the type of the resin constituting the resin film, the contents of the fine fibrous cellulose and the hydrophilic polymer in the fine fibrous cellulose-containing layer, the thickness of each layer constituting the laminate, and the like.

The haze of the laminate is a value measured in accordance with JIS K 7136:2000.

### [Yellowness index]

The yellowness index (YI value) of the laminate of the present embodiment is preferably 8.00 or less, more preferably 6.00 or less, still more preferably 4.00 or less, further still more preferably 3.00 or less, and yet more preferably 2.50 or less, and the lower limit is not particularly limited.

The YI value of the laminate can be controlled by the fiber width of the fine fibrous cellulose, the type of the ionic group, the amount of ionic groups introduced, the type of the hydrophilic polymer, the type of the resin constituting the resin film, the contents of the fine fibrous cellulose and the hydrophilic polymer in the fine fibrous cellulose-containing layer, the thickness of each layer constituting the laminate, and the like.

The YI value of the laminate is a value measured in accordance with JIS K 7373:2006.

### [Thickness]

The thickness of the laminate of the present embodiment is preferably 800 µm or more, more preferably 1,000 µm or more, and still more preferably 1,200 µm or more, and preferably 6,000 µm or less, more preferably 5,000 µm or less, and still more preferably 4,000 µm or less. The thickness of the laminate is preferably appropriately adjusted according to the application.

### [Method for producing laminate]

The laminate of the present embodiment can be produced, for example, by the following steps.
Step 1: a step of obtaining the fine fibrous cellulose-containing layer (fine fibrous cellulose-containing sheet) 1 formed by laminating the fine fibrous cellulose-containing layer 1A and the fine fibrous cellulose-containing layer 1B
Step 2: a step of providing the adhesive layer 1A on the fine fibrous cellulose-containing layer 1A of the fine fibrous cellulose-containing layer 1, and a step of providing the adhesive layer 1B on the fine fibrous cellulose-containing layer 1B to obtain the laminated sheet 1
Step 3: a step of obtaining the fine fibrous cellulose-containing layer (fine fibrous cellulose-containing sheet) 2 formed by laminating the fine fibrous cellulose-containing layer 2A and the fine fibrous cellulose-containing layer 2B
Step 4: a step of providing the adhesive layer 2A on the fine fibrous cellulose-containing layer 2A of the fine fibrous cellulose-containing layer 2, and a step of providing the adhesive layer 2B on the fine fibrous cellulose-containing layer 2B to obtain the laminated sheet 2
Step 5: a step of laminating the resin film 1, the laminated sheet 1, the core resin plate, the laminated sheet 2, and the resin film 2 in the order of resin film 1/adhesive layer 1B/fine fibrous cellulose-containing layer 1B/fine fibrous cellulose-containing layer 1A/adhesive layer 1A/core resin plate/adhesive layer 2A/fine fibrous cellulose-containing layer 2A/fine fibrous cellulose-containing layer 2B/adhesive layer 2B/resin film 2, and heating and pressurizing the obtained laminate precursor
Steps 1 and 2 are performed in this order, and steps 2 and 4 are performed in this order. Further, before step 5, steps 1 to 4 are performed.

Note that the method for producing the laminate of the present embodiment is not limited thereto.

Hereinafter, an example of a method for producing a laminate of the present embodiment will be described.

### [Preparation of fine fibrous cellulose-containing sheet 1 and laminated sheet 1]

A coating liquid for the fine fibrous cellulose-containing layer 1A containing fine fibrous cellulose and the hydrophilic polymer 1A and a coating liquid for the fine fibrous cellulose-containing layer 1B containing fine fibrous cellulose and the hydrophilic polymer 1B are prepared.

In the preparation of the coating liquid, for example, it is preferable that an aqueous solution of a hydrophilic polymer is prepared in advance, and a fine fibrous cellulose dispersion is mixed with the aqueous solution to prepare a coating liquid.

The fine fibrous cellulose-containing layer 1A and the fine fibrous cellulose-containing layer 1B are obtained by heating and drying the above-described coating liquid. Specifically, examples of the method include a method of applying the coating liquid onto a substrate and heating and drying the coating liquid to obtain these layers. A coating liquid for the fine fibrous cellulose-containing layer 1A is applied onto a substrate, and heated and dried to produce the fine fibrous cellulose-containing layer 1A, and then a coating liquid for the fine fibrous cellulose-containing layer 1B is applied onto the obtained fine fibrous cellulose-containing layer 1A, and heated and dried to obtain the fine fibrous cellulose-containing layer (fine fibrous cellulose-containing sheet) 1 in which the fine fibrous cellulose-containing layer 1A and the fine fibrous cellulose-containing layer 1B are laminated. The order of coating is not limited to this, and the fine fibrous cellulose-containing layer 1A may be laminated after the fine fibrous cellulose-containing layer 1B is previously fabricated.

The material of the substrate is not particularly limited, but it is preferable to select a material that facilitates peeling after drying. The substrate is preferably a resin film, a resin plate, a metal film, or a metal plate.

When the coating liquid is spread on the substrate, a damming frame may be fixed on the substrate in order to obtain a fine fibrous cellulose-containing layer having a desired thickness and basis weight. Alternatively, a substrate on which a vat-like dam is formed may be used. The damming frame is not particularly limited, but for example, it is preferable to select a damming frame that facilitates peeling after drying. From such a viewpoint, a damming frame formed from a resin plate or a metal plate is preferable.

The coating machine for applying the coating liquid to the substrate is not particularly limited, and for example, a roll coater, a gravure coater, a die coater, a curtain coater, an air doctor coater, or the like can be used. When the solid rubber composition is a sheet-shaped rubber mixture, a die coater, a curtain coater, and a spray coater are particularly preferable because the thickness of the sheet can be made more uniform.

The solid content concentration of the coating liquid is, for example, 0.1 to 5.0% by mass, and more preferably 0.3 to 3.0% by mass.

Next, a resin coating liquid (adhesive composition) is applied onto the obtained fine fibrous cellulose-containing layer 1, and heated to dry and cure the adhesive composition, thereby obtaining the laminated sheet 1 (layer configuration: adhesive layer 1A/fine fibrous cellulose-containing layer 1A/fine fibrous cellulose-containing layer 1B/adhesive layer 1B). The heating temperature is preferably 50°C or higher and 120°C or lower, and more preferably 65°C or higher and 105°C or lower. The heating time is preferably 5 minutes or more and 6 hours or less, more preferably 15 minutes or more and 3 hours or less, and still more preferably 20 minutes or more and 2 hours or less.

In addition, the laminated sheet 2 (layer configuration: adhesive layer 2A/fine fibrous cellulose-containing layer 2A/fine fibrous cellulose-containing layer 2B/adhesive layer 2B) is obtained by the same procedure.

Furthermore, by performing the additional heat treatment on the sheet 1 or the sheet 2, the adhesion between the adhesive layer and the fine fibrous cellulose-containing layer can be further strengthened. The heating temperature is preferably 50°C or higher and 120°C or lower, and more preferably 70°C or higher and 100°C or lower. The heating time is preferably 5 hours or more and 150 hours or less, and more preferably 15 hours or more and 100 hours or less.

### [Formation of laminate]

The laminated sheet 1 is disposed on one surface of the core resin plate so that the core resin plate and the adhesive layer 1A are in contact with each other, and the resin film 1 is disposed so as to be in contact with the adhesive layer 1B. Furthermore, the sheet 2 is disposed on the other surface of the core resin plate so that the core resin plate and the adhesive layer 2A are in contact with each other, and the resin film 2 is disposed so as to be in contact with the adhesive layer 2B. The laminate precursor thus obtained is heated from room temperature (for example, 23°C) to 130 to 190°C in a state of being pressurized at 0.5 to 10 MPa, preferably over 15 seconds to 30 minutes, more preferably over 30 seconds to 20 minutes, held preferably for 15 seconds to 15 minutes, more preferably for 30 seconds to 10 minutes, and then cooled to 20 to 40°C over 15 seconds to 30 minutes, more preferably over 30 seconds to 15 minutes, whereby the laminate of the present embodiment can be obtained.

In the present embodiment, a laminate may also be obtained by preparing, as the laminated sheet 1, a laminated sheet 1' in which the adhesive layer 1B and the resin film 1 are disposed in advance so as to be in contact with each other, similarly preparing, as the laminated sheet 2, a laminated sheet 2' in which the adhesive layer 2B and the resin film 2 are disposed in advance so as to be in contact with each other, disposing the laminated sheet 1' on one surface of the core resin plate so that the adhesive layer 1A of the laminated sheet 1' is in contact with the core resin plate, disposing the laminated sheet 2' on the other surface so that the adhesive layer 2A of the laminated sheet 2' is in contact with the core resin plate, and heating and pressurizing the obtained laminate precursor in the same manner as described above.

### [Applications]

The fine fibrous cellulose-containing sheet and the laminated sheet of the present embodiment are suitable for applications such as optical members for various display devices, various solar cells, and the like, substrates of electronic devices, separators for electrochemical elements, members of home electric appliances, window agents of various vehicles and building materials, interior materials, exterior materials, and packaging materials. In particular, the laminated sheet itself may be used for the above applications, or a resin layer may be laminated on the laminated sheet and used.

Furthermore, the laminate of the present embodiment is suitable for optical members for various display devices, various solar cells, and the like. The laminate having the laminated sheet of the present embodiment is also suitable for applications such as substrates of electronic devices, separators for electrochemical elements, members of home electric appliances, window materials of various vehicles and buildings, interior materials, exterior materials, and packaging materials.

The laminate of the present embodiment may be further subjected to thermal bending. Since the laminate of the present embodiment is excellent in adhesiveness, delamination between layers of the laminate is suppressed even when thermal bending is performed, and thus the laminate can be suitably used for applications in which thermal bending is performed.

### Examples

The features of the present invention will be described more specifically below with reference to Examples and Comparative Examples. The materials, amounts to be used, ratios, contents of treatment, procedures of treatment, and the like described in the following Examples can be appropriately changed without departing from the gist of the present invention. Therefore, the scope of the present invention should not be restrictively interpreted by the following specific examples. Unless otherwise specified, the following operations were performed under conditions of room temperature (23°C) and a relative humidity of 50%.

### <Production of fine fibrous cellulose>

### (Phosphorylation treatment)

As the raw material pulp, hardwood dissolving pulp (dry sheet) manufactured by Oji Paper Co., Ltd. was used. The raw material pulp was subjected to phosphorylation treatment in the following way. Firstly, a mixed aqueous solution of ammonium dihydrogen phosphate and urea was added to 100 parts by mass (absolute dry mass) of the above raw material pulp, the resultant mixture was adjusted so that the content of the ammonium dihydrogen phosphate was 45 parts by mass, the content of urea was 120 parts by mass, and the content of water was 150 parts by mass, and chemical solution-impregnated pulp was obtained. Next, the obtained chemical solution-impregnated pulp was heated in a hot-air dryer at 165°C for 250 seconds, whereby a phosphoric acid group was introduced into cellulose in the pulp, and phosphorylated pulp was obtained.

### (Washing treatment)

Next, the obtained phosphorylated pulp was subjected to a washing treatment. The washing treatment was performed by repeating an operation of stirring a pulp dispersion obtained by pouring 10 L of ion-exchanged water into 100 g (absolute dry mass) of the phosphorylated pulp such that the pulp was uniformly dispersed, and then filtering and dehydrating the pulp dispersion. Washing was terminated when the electric conductivity of the filtrate reached 100 µS/cm or less.

### (Neutralization treatment)

Next, the phosphorylated pulp after washing was subjected to a neutralization treatment as follows. Firstly, the phosphorylated pulp after washing was diluted with 10 L of ion-exchanged water, and then a 1 N sodium hydroxide aqueous solution was added little by little while the mixture was stirred, and thereby, a phosphorylated pulp slurry with a pH of 12 or higher and 13 or lower was obtained. Next, the phosphorylated pulp slurry was dehydrated, and a neutralized phosphorylated pulp was obtained. Next, the phosphorylated pulp after the neutralization treatment was subjected to the above washing treatment.

### (Nitrogen removal treatment)

Ion-exchanged water was added to the phosphorylated pulp to prepare a slurry having a solid content concentration of 4% by mass. A 48% by mass sodium hydroxide aqueous solution was added to the slurry to adjust the pH of the slurry to 13.4, and the slurry was heated for 1 hour under the condition that the liquid temperature was 85°C. Thereafter, the pulp slurry was dehydrated, and an operation of stirring a pulp dispersion obtained by pouring 10 L of ion-exchanged water into 100 g (absolute dry mass) of the phosphorylated pulp so that the pulp was uniformly dispersed, and then filtering and dehydrating the pulp dispersion was repeated to remove excessive sodium hydroxide. Removal was terminated when the electric conductivity of the filtrate reached 100 µS/cm or less. The amount of carbamide groups introduced, which was obtained from the amount of nitrogen measured by a measurement method described later, was 0.01 mmol/g.

The phosphorus-oxo-oxidized pulp thus obtained was subjected to measurement of infrared absorption spectrum by FT-IR. As a result, absorption based on P=O of a phosphoric acid group was observed in the vicinity of 1230 cm⁻¹, which confirmed that the phosphoric acid group was added to the pulp. In addition, the obtained phosphorylated pulp was used as a sample, and was analyzed with an X-ray diffraction apparatus. As a result, typical peaks were confirmed at two positions in the vicinity of 2θ=14° or more and 17° or less, and in the vicinity of 2θ=22° or more and 23° or less, and it was confirmed that the phosphorylated pulp maintained a cellulose type I crystal structure. Note that the amount of phosphoric acid groups (first dissociated acid amount) was 1.45 mmol/g, which was measured by a measurement method that would be described later. Note that the total dissociated acid amount was 2.45 mmol/g.

### (Defibration treatment)

Ion-exchanged water was added to the obtained phosphorylated pulp to prepare a slurry having a solid content concentration of 2% by mass. This slurry was treated six times with a wet atomization device (STAR BURST, manufactured by Sugino Machine Limited) at a pressure of 200 MPa to obtain a fine fibrous cellulose dispersion containing a fine fibrous cellulose.

### (Substituent removal treatment (high-temperature heat treatment))

A 20 % by mass citric acid aqueous solution was added to the obtained fine fibrous cellulose dispersion, and the pH of the dispersion was adjusted to 5.5. Thereafter, the fine fibrous cellulose dispersion was placed in a pressure-resistant container, and heated at a liquid temperature of 160°C for 15 minutes until the amount of phosphoric acid groups reached 0.08 mmol/g. Generation of aggregates of the fine fibrous cellulose was confirmed by this operation.

### (Washing treatment of slurry after substituent removal)

The same amount of ion-exchanged water as that of the slurry was added to the heated slurry to form a slurry having a solid content concentration of about 1% by mass, and an operation of stirring the slurry and then filtering and dehydrating the slurry was repeated, thereby washing the slurry. When the electric conductivity of the filtrate reached 10 µS/cm or less, ion-exchanged water was added again to the slurry to form a slurry having a solid content concentration of about 1% by mass, and the slurry was allowed to stand for 24 hours. Thereafter, an operation of filtering and dehydrating the slurry was further repeated, and the time point at which the electric conductivity of the filtrate reached 10 µS/cm or less again was defined as the washing end point. Ion-exchanged water was added to the obtained aggregates of the fine fibrous cellulose to obtain a slurry after substituent removal. The solid content concentration of this slurry was 1.7% by mass.

### (Uniform dispersion of slurry after substituent removal)

Ion-exchanged water was added to the obtained slurry after substituent removal to form a slurry having a solid content concentration of 1.0% by mass. Then, the slurry was treated three times with a wet atomization device (STAR BURST, manufactured by Sugino Machine Limited) at a pressure of 200 MPa to obtain a substituent-removed fine fibrous cellulose dispersion (A) containing a substituent-removed fine fibrous cellulose. The fiber width of the fine fibrous cellulose was measured using a transmission electron microscope and found to be 4 nm.

### (Measurement of amount of phosphorus oxoacid groups)

In the measurement of the amount of phosphorus oxoacid groups (equal to the amount of phosphorus oxoacid groups of the phosphorus-oxo-oxidized (phosphorylated or phosphorous acid-treated) pulp), ion-exchanged water was added to a fine fibrous cellulose dispersion containing a fine fibrous cellulose as a target to prepare a slurry having a fine fibrous cellulose content of 0.2% by mass. The obtained slurry was treated with an ion exchange resin, and then subjected to titration with an alkali, thereby performing measurement.

The treatment with an ion exchange resin was performed by adding a strongly acidic ion exchange resin (Amberjet 1024; manufactured by Organo Corporation, conditioned) having a volume of 1/10 to the fine fibrous cellulose-containing slurry, shaking the mixture for 1 hour, then pouring the resultant mixture onto a mesh having an opening of 90 µm, and separating the ion exchange resin and the slurry.

The titration using an alkali was performed by measuring a change in a pH value indicated by the slurry while adding 10 µL of a 0.1 N sodium hydroxide aqueous solution to the fine fibrous cellulose-containing slurry after the treatment with the ion exchange resin every five seconds. Titration was performed while nitrogen gas was blown into the slurry from 15 minutes before the start of titration. In this neutralization titration, two points at which the increment (differential value of a pH with respect to the amount of the alkali added dropwise) is maximum are observed in the curve obtained by plotting a measured pH with respect to the amount of the alkali added. Out of these points, a maximum point of the increment obtained first after addition of the alkali is referred to as a first end point, and a maximum point of the increment obtained next is referred to as a second end point (Fig. 1). The alkali amount required from the start of titration to the first end point is equal to the first dissociated acid amount in the slurry used for titration. In addition, the alkali amount required from the start of titration to the second end point is equal to the total dissociated acid amount in the slurry used for titration. Note that a value obtained by dividing the alkali amount (mmol) required from the start of titration to the first end point by the solid content (g) in the slurry to be titrated was defined as the amount of phosphorus oxoacid groups (mmol/g). In addition, a value obtained by dividing the alkali amount (mmol) required from the start of titration to the second end point by the solid content (g) in the slurry to be titrated was defined as the total dissociated acid amount (mmol/g).

The amount of phosphorus oxoacid groups (amount of phosphorus oxoacid groups introduced) (mmol/g) indicates the amount of substituents per 1 g of the mass of the fine fibrous cellulose when the counter ion of the phosphorus oxoacid group is a hydrogen ion (H⁺).

### (Measurement of amount of carbamide groups)

The amount of carbamide groups in the fine fibrous cellulose was measured by subjecting a sample after freeze-drying and pulverization treatment to a trace total nitrogen analyzer TN-110 manufactured by Mitsubishi Chemical Analytech Co., Ltd. Ionic nitrogen had been removed in the course of the neutralization treatment and the washing treatment. The amount (mmol/g) of carbamide groups introduced per unit mass of the fine fibrous cellulose was calculated by dividing the nitrogen content (g/g) per unit mass of the fine fibrous cellulose obtained by trace nitrogen analysis by the atomic weight of nitrogen.

### <Dissolution of cellulose ether>

Hydroxypropyl methylcellulose (METOLOSE 65SH-1500, manufactured by Shin-Etsu Chemical Co., Ltd., weight average molecular weight: 2.2 × 10⁵, degree of substitution (methoxy group): 1.8, number of moles of substitution (hydroxypropoxy group): 0.15, hydroxyl value: 340 mgKOH/g to 360 mgKOH/g (calculated value: 343 mgKOH/g)) as a nonionic water-soluble cellulose ether was dissolved in ion-exchanged water to obtain a cellulose ether aqueous solution having a concentration of 2% by mass.

### <Dissolution of polyvinyl alcohol>

Acetoacetyl group-modified polyvinyl alcohol (hereinafter, also referred to as "polyvinyl alcohol (A)", GOHSENX^{TM}Z-300, manufactured by Mitsubishi Chemical Corporation, degree of saponification: 98.0 to 99.0 mol%, hydroxyl value ≈ 1200 to 1250 mgKOH/g) was added to ion-exchanged water so that the solid content concentration was 12% by mass, and the mixture was stirred at 95°C for 1 hour for dissolution. A polyvinyl alcohol aqueous solution (A) was obtained by the above procedure.

A polyvinyl alcohol aqueous solution (B) was obtained in the same manner as described above except that acetoacetyl group-modified polyvinyl alcohol (hereinafter, also referred to as "polyvinyl alcohol (B)", GOHSENX^{™}Z-200, manufactured by Mitsubishi Chemical Corporation, degree of saponification: 99.0 mol% or more, hydroxyl value ≈ 1235 to 1275 mgKOH/g) was used instead of the polyvinyl alcohol (A).

Furthermore, a polyvinyl alcohol aqueous solution (C) was obtained in the same manner as described above except that a defoaming agent-added polyvinyl alcohol (hereinafter, also referred to as "polyvinyl alcohol (C)", Kuraray Poval PVA 22-88SB, manufactured by Kuraray Co., Ltd., degree of saponification: 87.0 to 89.0 mol%, hydroxyl value ≈ 985 to 1025 mgKOH/g) was used instead of the polyvinyl alcohol (A).

### <Example 1>

### (Preparation of fine fibrous cellulose-containing sheet)

The fine fibrous cellulose dispersion, the cellulose ether aqueous solution, and the polyvinyl alcohol aqueous solution (A) were each diluted with ion-exchanged water so that the solid content concentration was 0.5% by mass.

Next, 30 parts by mass of the diluted cellulose ether aqueous solution was mixed with 70 parts by mass of the diluted fine fibrous cellulose dispersion to obtain a mixed liquid (A1).

Furthermore, 30 parts by mass of the diluted polyvinyl alcohol aqueous solution (A) was mixed with 70 parts by mass of the diluted fine fibrous cellulose dispersion to obtain a mixed liquid (B1).

The mixed liquid (A1) was weighed so that the finished basis weight of the sheet was 35 g/m², and spread on a commercially available acrylic plate. A damming frame (inner dimension: 250 mm × 250 mm, height: 5 cm) was disposed on the acrylic plate so that a predetermined basis weight was obtained. This was dried in a dryer at 100°C for 1 hour, and then the mixed liquid (B1) was spread thereon so that the finished basis weight was 15 g/m². This was dried again and peeled off from the acrylic plate to obtain a fine fibrous cellulose-containing sheet obtained by laminating two fine fibrous cellulose-containing layers containing different hydrophilic polymers.

### (Formation of adhesive layer)

8.5 parts by mass of a modified polycarbonate resin (Iupizeta FPC-2136, manufactured by MITSUBISHI GAS CHEMICAL COMPANY, INC.), 60 parts by mass of toluene, and 30 parts by mass of methyl ethyl ketone were mixed to obtain a resin coating liquid. Then, 1.5 parts by mass of an isocyanate compound (DURANATE TPA-100, manufactured by Asahi Kasei Chemicals Corporation) as an adhesion aid was added to and mixed with the resin coating liquid. The resin coating liquid was applied to one surface (surface containing cellulose ether, which was in contact with the acrylic plate) of the fine fibrous cellulose-containing sheet with a bar coater. Thereafter, the resin coating liquid was cured by heating at 100°C for 1 hour to form the adhesive layer A. Then, the resin coating liquid was applied to the opposite surface of the fine fibrous cellulose-containing sheet in the same procedure, and then heated at 70°C for 30 minutes to cure the resin coating liquid, thereby forming the adhesive layer B, and a laminated sheet was thus obtained. Furthermore, the obtained laminated sheet was heated at 80°C for 80 hours to perform an additional heat treatment. The thickness of the adhesive layer of each surface formed by the above process was 3 µm.

### (Production of laminate)

The fine fibrous cellulose-containing sheet provided with the adhesive layers was cut with a cutter to prepare a sheet having a size of 50 mm × 50 mm. Next, one core resin plate cut out into a size of 100 mm ×100 mm from a commercially available polycarbonate plate (core resin plate (PC)) having a thickness of 1 mm, and two resin films cut out into a size of 50 mm × 50 mm from a commercially available polycarbonate film (resin film) having a thickness of 0.2 mm were prepared. The prepared components were stacked so as to have a layer configuration of polycarbonate film/adhesive layer B/fine fibrous cellulose-containing sheet (fine fibrous cellulose-containing layer containing polyvinyl alcohol (A)/fine fibrous cellulose-containing layer containing cellulose ether)/adhesive layer A/polycarbonate plate/adhesive layer A/fine fibrous cellulose-containing sheet (fine fibrous cellulose-containing layer containing cellulose ether/fine fibrous cellulose-containing layer containing polyvinyl alcohol (A))/adhesive layer B/polycarbonate film. At this time, the polycarbonate film and the fine fibrous cellulose-containing sheet were disposed at the center of the polycarbonate plate. This was sandwiched between stainless steel plates having a thickness of 1 mm and a dimension of 200 mm × 200 mm, and the laminate precursor with stainless steel plates was inserted into a Mini Test Press (MP-WCH, manufactured by Toyo Seiki Seisaku-sho, Ltd.) set at room temperature. The Mini Test Press was heated to 150°C over 3 minutes under a pressing pressure of 1 MPa, held in this state for 5 minutes, and then cooled to 30°C over 5 minutes. As the stainless steel plate, one obtained by applying a release agent (Tef-Release, manufactured by Audec Corporation) to a surface with which the laminate precursor would be sandwiched was used. A laminate of a fine fibrous cellulose-containing sheet and polycarbonate was obtained by the above procedure.

### <Example 2>

In (Preparation of fine fibrous cellulose-containing sheet) of Example 1, 60 parts by mass of the diluted polyvinyl alcohol aqueous solution (A) was mixed with 40 parts by mass of the diluted fine fibrous cellulose dispersion to obtain a mixed liquid (B2).

A laminate was obtained in the same manner as Example 1 except that the mixed liquid (B2) was used instead of the mixed liquid (B1).

### <Example 3>

A polyvinyl alcohol aqueous solution (B) was used instead of the polyvinyl alcohol aqueous solution (A) in Example 1 to obtain a mixed liquid (B3). A laminate was obtained in the same manner as Example 1 except that the mixed liquid (B3) was used instead of the mixed liquid (B1).

### <Example 4>

A laminate was obtained in the same manner as Example 1 except that in Example 1, the polyvinyl alcohol aqueous solution (C) was used instead of the polyvinyl alcohol aqueous solution (A) and a mixed liquid (B4) obtained by mixing 90 parts by mass of the diluted polyvinyl alcohol aqueous solution (C) with 10 parts by mass of the diluted fine fibrous cellulose dispersion was used in (Preparation of fine fibrous cellulose-containing sheet).

### <Example 5>

A laminate was obtained in the same manner as Example 1 except that in Example 1, a commercially available polymethyl methacrylate plate (core resin plate (PMMA)) having a thickness of 1 mm was used instead of the commercially available polycarbonate plate (core resin plate (PC)) having a thickness of 1 mm.

### <Comparative Example 1>

A fine fibrous cellulose-containing sheet was prepared in the same manner as in Example 1, and adhesive layers were provided. Thereafter, a laminate was obtained in the same manner as in Example 1 except that in (Production of laminate), the polycarbonate film/fine fibrous cellulose-containing sheet provided with adhesive layers/polycarbonate plate/fine fibrous cellulose-containing sheet provided with adhesive layers/polycarbonate film were laminated in this order such that the fine fibrous cellulose-containing layer containing the polyvinyl alcohol (A) as a hydrophilic polymer was laminated on the polycarbonate plate side and the fine fibrous cellulose-containing layer containing cellulose ether as a hydrophilic polymer was laminated on the polycarbonate film side.

### <Comparative Example 2>

A fine fibrous cellulose-containing sheet was prepared in the same manner as in Example 2, and adhesive layers were provided. Thereafter, a laminate was obtained in the same manner as in Example 2 except that in (Production of laminate), the polycarbonate film/fine fibrous cellulose-containing sheet provided with adhesive layers/polycarbonate plate/fine fibrous cellulose-containing sheet provided with adhesive layers/polycarbonate film were laminated in this order such that the fine fibrous cellulose-containing layer containing the polyvinyl alcohol (A) as a hydrophilic polymer was laminated on the polycarbonate plate side and the fine fibrous cellulose-containing layer containing cellulose ether as a hydrophilic polymer was laminated on the polycarbonate film side.

### <Comparative Example 3>

A fine fibrous cellulose-containing sheet was prepared in the same manner as in Example 3, and adhesive layers were provided. Thereafter, a laminate was obtained in the same manner as in Example 3 except that in (Production of laminate), the polycarbonate film/fine fibrous cellulose-containing sheet provided with adhesive layers/polycarbonate plate/fine fibrous cellulose-containing sheet provided with adhesive layers/polycarbonate film were laminated in this order such that the fine fibrous cellulose-containing layer containing the polyvinyl alcohol (B) as a hydrophilic polymer was laminated on the polycarbonate plate side and the fine fibrous cellulose-containing layer containing cellulose ether as a hydrophilic polymer was laminated on the polycarbonate film side.

### <Comparative Example 4>

In (Preparation of fine fibrous cellulose-containing sheet) of Example 1, only the mixed liquid (A1) containing 30 parts by mass of the diluted cellulose ether aqueous solution with respect to 70 parts by mass of the fine fibrous cellulose dispersion was used. The mixed liquid (A1) was weighed so that the finished basis weight of the sheet was 50 g/m², and spread on a commercially available acrylic plate. Thereafter, the mixed liquid (A1) was dried in a dryer at 100°C for 1 hour, and the resultant sheet was peeled off from the acrylic plate to obtain a fine fibrous cellulose-containing sheet. The thickness of the sheet was 34 µm. A laminate was obtained in the same manner as in Example 1 except for the above procedure.

### <Comparative Example 5>

A fine fibrous cellulose-containing sheet was prepared in the same manner as in Comparative Example 4, and adhesive layers were formed. A laminate was obtained in the same manner as Comparative Example 4 except that in (Formation of laminate), the fine fibrous cellulose-containing sheet was laminated such that the side on which the fine fibrous cellulose-containing sheet had been in contact with the acrylic plate was disposed on the polycarbonate film side.

### <Comparative Example 6>

A laminate was obtained in the same manner as Comparative Example 4 except that the mixed liquid (B1) was used instead of the mixed liquid (A1) in (Preparation of fine fibrous cellulose-containing sheet) of Comparative Example 4.

### <Comparative Example 7>

A laminate was obtained in the same manner as Comparative Example 4 except that the mixed liquid (B3) was used instead of the mixed liquid (A1) in (Preparation of fine fibrous cellulose-containing sheet) of Comparative Example 4.

### <Comparative Example 8>

A laminate was obtained in the same manner as Comparative Example 4 except that, in (Preparation of fine fibrous cellulose-containing sheet) of Comparative Example 4, the composition of the mixed liquid was changed so that the amount of the diluted cellulose ether aqueous solution was 15 parts by mass and the amount of the diluted polyvinyl alcohol aqueous solution (A) was 15 parts by mass with respect to 70 parts by mass of the diluted fine fibrous cellulose dispersion.

### <Comparative Example 9>

A laminate was obtained in the same manner as Comparative Example 8 except that, in (Preparation of fine fibrous cellulose-containing sheet) of Comparative Example 8, the composition of the mixed liquid was changed so that the amount of the diluted cellulose ether aqueous solution was 21 parts by mass and the amount of the diluted polyvinyl alcohol aqueous solution (A) was 9 parts by mass with respect to 70 parts by mass of the diluted fine fibrous cellulose dispersion.

### <Measurement and evaluation>

### (Thickness of fine fibrous cellulose-containing sheet)

In Examples 1 to 4 and Comparative Examples 1 to 3, the thickness of the fine fibrous cellulose-containing sheet before providing the adhesive layer was measured with a stylus thickness gauge (MillItron 1202D, manufactured by Mahr GmbH). Furthermore, the thickness of each layer was calculated in consideration of the ratio of the assumed finished basis weight.

In Comparative Examples 4 to 9, the thickness of the fine fibrous cellulose-containing sheet before providing the adhesive layer was measured.

### (Thickness of adhesive layer)

In all examples and comparative examples, first, the thickness of the adhesive layer A was calculated by subtracting the thickness of the fine fibrous cellulose-containing layer measured by the above-described method from the thickness of the fine fibrous cellulose-containing sheet provided with the adhesive layer A. The thickness of the adhesive layer B was calculated by subtracting the total thickness of the adhesive layer A and the fine fibrous cellulose-containing layer from the thickness of the fine fibrous cellulose-containing sheet provided with the adhesive layers A and B.

### (Evaluation of sheet strength (ease of cracking of sheet))

The sheet strength was evaluated in the following four ranks according to the frequency of cracking generated in the edge when the sheet was cut with a cutter.
A: Cracking of the edge hardly occurs.
B: Cracking of the edge may rarely occur.
C: Cracking of the edge occurs.
D: Cracking of the edge significantly occurs.

### (Transparency of laminate)

The total light transmittance of the laminate was evaluated using a haze meter (HM-150, manufactured by Murakami Color Research Laboratory Co., Ltd.) in accordance with JIS K 7361-1:1997. The haze of the laminate was evaluated in accordance with JIS K 7136:2000.

### (Yellowness of laminate)

The yellowness (yellowness index, YI value) of the laminate was measured using Colour Cute i (manufactured by Suga Test Instruments Co., Ltd.) in accordance with JIS K 7373:2006.

### (Evaluation of adhesive strength)

The adhesive strength between layers of the laminate was evaluated by the following method.

Cutter evaluation: A cut of 10 mm × 10 mm was made on the surface of the laminate, and this region was peeled off.

Peeling evaluation: The polycarbonate film at the edge of the laminate was gripped and peeled off.

The adhesive strength was evaluated according to the following criteria.
A: The polycarbonate film cannot be peeled off, or if the polycarbonate film is forcibly peeled off, the polycarbonate film breaks and the interface is disturbed.
B: A large force is required for peeling, and the interface after peeling is disturbed.
C: A force is required for peeling, but the interface after peeling is smooth.
D: The force required for peeling is small, and the interface after peeling is smooth.
E: Peeling progresses only by applying a small impact.

### (Identification of peel interface)

Ion-exchanged water was dropped on the side of the polycarbonate film which had been peeled off in the evaluation of adhesive strength and the side of the polycarbonate plate, with a dropper, and after 10 seconds, water droplets were wiped off therefrom. When exudation of water droplets occurred, it was determined that the fine fibrous cellulose-containing sheet was present, and the peel interface was assumed from the position where the exudation occurred as follows.

A case where exudation occurred in the peeled polycarbonate film: peeled at the interface between the adhesive layer (adhesive layer A) in contact with the polycarbonate plate and the fine fibrous cellulose-containing sheet (CNF layer)
A case where exudation occurred on the polycarbonate plate side: peeled at interface between the adhesive layer (adhesive layer B) in contact with the polycarbonate film and the fine fibrous cellulose-containing sheet (CNF layer)

### (Evaluation of proper processing)

Assuming secondary processing of the laminate, the presence or absence of peeling from the edge was observed when the laminate was cut with a slide saw.

### [Table 1]

**Table 1**

| | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|
| Layer configuration | | | Resin film 1 | Resin film 1 | Resin film 1 | Resin film 1 | Resin film 1 | Resin film 1 | Resin film 1 | Resin film 1 | Resin film 1 | Resin film 1 | Resin film 1 | Resin film 1 | Resin film 1 | Resin film 1 |
| | | | Adhesive layer 1B | Adhesive layer 1B | Adhesive layer 1B | Adhesive layer 1B | Adhesive layer 1B | Adhesive layer 1B | Adhesive layer 1B | Adhesive layer 1B | Adhesive layer 1B | Adhesive layer 1B | Adhesive layer 1B | Adhesive layer 1B | Adhesive layer 1B | Adhesive layer 1B |
| | | | CNF layer 1B | CNF layer 1B | CNF layer 1B | CNF layer 1B | CNF layer 1B | CNF layer 1B | CNF layer 1B | CNF layer 1B | CNF layer 1 | CNF layer 1 | CNF layer 1 | CNF layer 1 | CNF layer 1 | CNF layer 1 |
| | | | CNF layer 1A | CNF layer 1A | CNF layer 1A | CNF layer 1A | CNF layer 1A | CNF layer 1A | CNF layer 1A | CNF layer 1A | | | | | | |
| | | | Adhesive layer 1A | Adhesive layer 1A | Adhesive layer 1A | Adhesive layer 1A | Adhesive layer 1A | Adhesive layer 1A | Adhesive layer 1A | Adhesive layer 1A | Adhesive layer 1A | Adhesive layer 1A | Adhesive layer 1A | Adhesive layer 1A | Adhesive layer 1A | Adhesive layer 1A |
| | | | Core resin plate (PC) | Core resin plate (PC) | Core resin plate (PC) | Core resin plate (PC) | Core resin plate (PMMA) | Core resin plate (PC) | Core resin plate (PC) | Core resin plate (PC) | Core resin plate (PC) | Core resin plate (PC) | Core resin plate (PC) | Core resin plate (PC) | Core resin plate (PC) | Core resin plate (PC) |
| | | | Adhesive layer 2A | Adhesive layer 2A | Adhesive layer 2A | Adhesive layer 2A | Adhesive layer 2A | Adhesive layer 2A | Adhesive layer 2A | Adhesive layer 2A | Adhesive layer 2A | Adhesive layer 2A | Adhesive layer 2A | Adhesive layer 2A | Adhesive layer 2A | Adhesive layer 2A |
| | | | CNF layer 2A | CNF layer 2A | CNF layer 2A | CNF layer 2A | CNF layer 2A | CNF layer 2A | CNF layer 2A | CNF layer 2A | CNF layer 2 | CNF layer 2 | CNF layer 2 | CNF layer 2 | CNF layer 2 | CNF layer 2 |
| | | | CNF layer 2B | CNF layer 2B | CNF layer 2B | CNF layer 2B | CNF layer 2B | CNF layer 2B | CNF layer 2B | CNF layer 2B | | | | | | |
| | | | Adhesive layer 2B | Adhesive layer 2B | Adhesive layer 2B | Adhesive layer 2B | Adhesive layer 2B | Adhesive layer 2B | Adhesive layer 2B | Adhesive layer 2B | Adhesive layer 2B | Adhesive layer 2B | Adhesive layer 2B | Adhesive layer 2B | Adhesive layer 2B | Adhesive layer 2B |
| | | | Resin film 2 | Resin film 2 | Resin film 2 | Resin film 2 | Resin film 2 | Resin film 2 | Resin film 2 | Resin film 2 | Resin film 2 | Resin film 2 | Resin film 2 | Resin film 2 | Resin film 2 | Resin film 2 |
| CNF Layer 1A and CNF Layer 2A or CNF Layer 1 and CNF Layer 2 | Fine fibrous cellulose | parts by mass | 70 | 70 | 70 | 70 | 70 | 70 | 40 | 70 | 70 | 70 | 70 | 70 | 70 | 70 |
| | Hydroxypropyl methylcellulose | parts by mass | 30 | 30 | 30 | 30 | 30 | | | | 30 | 30 | | | 15 | 21 |
| | Polyvinyl alcohol (A) | parts by mass | | | | | | 30 | 60 | | | | 30 | | 15 | 9 |
| | Polyvinyl alcohol (B) | parts by mass | | | | | | | | 30 | | | | 30 | | |
| | Polyvinyl alcohol (C) | parts by mass | | | | | | | | | | | | | | |
| CNF layer 1B and CNF layer 2B | Fine fibrous cellulose | parts by mass | 70 | 40 | 70 | 10 | 70 | 70 | 70 | 70 | | | | | | |
| | Hydroxypropyl methylcellulose | parts by mass | | | | | | 30 | 30 | 30 | | | | | | |
| | Polyvinyl alcohol (A) | parts by mass | 30 | 60 | | | 30 | | | | | | | | | |
| | Polyvinyl alcohol (B) | parts by mass | | | 30 | | | | | | | | | | | |
| | Polyvinyl alcohol (C) | parts by mass | | | | 90 | | | | | | | | | | |
| CNF layer basis weight | 1A, 2A, 1, 2 (each layer) | g/m² | 35 | 35 | 35 | 35 | 35 | 15 | 15 | 15 | 50 | 50 | 50 | 50 | 50 | 50 |
| | 1B, 2B (each layer) | g/m² | 15 | 15 | 15 | 15 | 15 | 35 | 35 | 35 | - | - | - | - | - | - |
| | Overall basis weight (per side) | g/m² | 50 | 50 | 50 | 50 | 50 | 50 | 50 | 50 | 50 | 50 | 50 | 50 | 50 | 50 |
| CNF layer thickness | 1A, 2A, 1, 2 (each layer) | µm | 24 | 24 | 24 | 24 | 24 | 10 | 10 | 10 | 34 | 34 | 34 | 34 | 34 | 34 |
| | 1B, 2B (each layer) | µm | 10 | 10 | 10 | 10 | 10 | 24 | 24 | 24 | - | - | - | - | - | - |
| | Overall thickness (per one surface) | µm | 34 | 34 | 34 | 34 | 34 | 34 | 34 | 34 | 34 | 34 | 34 | 34 | 34 | 34 |
| Sheet strength (ease of cracking of sheet) | | - | B | B | B | B | B | B | B | B | A | A | D | D | D | C |
| Optical properties of laminate | Total light transmittance | % | 88.1 | 88.3 | 88.0 | 88.0 | 88.3 | 88.4 | 87.8 | 87.9 | 87.9 | 89.5 | 88.1 | 87.9 | 87.8 | 87.8 |
| | Haze | % | 0.9 | 0.9 | 0.9 | 1 | 0.7 | 0.9 | 0.9 | 1.1 | 0.7 | 0.7 | 1.1 | 0.8 | 0.9 | 1.1 |
| | YI | - | 2.26 | 2.01 | 2.11 | 2.15 | 1.92 | 1.06 | 2.09 | 2.01 | 1.03 | 1.05 | 2.02 | 2.24 | 2.28 | 2.08 |
| Adhesiveness evaluation in 5 ranks (A to E) | Cutter evaluation | Adhesive strength | A | A | A | A | A | E | E | E | D | E | A | A | E | E |
| | | Peel interface | Adhesive layer A/CNF-containing layer | Adhesive layer A/CNF-containing layer | Adhesive layer A/CNF-containing layer | Adhesive layer A/CNF-containing layer | Adhesive layer A/CNF-containing layer | Adhesive layer B/CNF-containing layer | Adhesive layer B/CNF-containing layer | Adhesive layer B/CNF-containing layer | Adhesive layer B/CNF-containing layer | Adhesive layer B/CNF-containing layer | Adhesive layer A/CNF-containing layer | Adhesive layer A/CNF-containing layer | Adhesive layer B/CNF-containing layer | Adhesive layer B/CNF-containing layer |
| | Peeling evaluation | Adhesive strength | A | A | B | A | A | D | D | D | C | D | A | B | C | D |
| | | Peel interface | Adhesive layer | Adhesive layer | Adhesive layer | Adhesive layer | Adhesive layer | Adhesive layer B/CNF- | Adhesive layer B/CNF- | Adhesive layer B/CNF- | Adhesive layer B/CNF- | Adhesive layer B/CNF- | Adhesive layer A/CNF- | Adhesive layer A/CNF- | Adhesive layer B/CNF- | Adhesive layer B/CNF- |
| | | | A/CNF-containing layer | A/CNF-containing layer | A/CNF-containing layer | A/CNF-containing layer | A/CNF-containing layer | containing layer | containing layer | containing layer | containing layer | containing layer | containing layer | containing layer | containing layer | containing layer |
| Proper processing (presence or absence of peeling from the edge at the time of cutting) | | - | Absent | Absent | Absent | Absent | Absent | Present | Present | Present | Present | Present | Absent | Absent | Present | Present |

From Table 1, the laminates of Examples 1 to 5 were excellent in adhesive strength, and cracking of the edge was suppressed and the strength was excellent even when the laminate was cut with a cutter. In addition, even when the laminate was cut with a slide saw, the occurrence of peeling from the edge was suppressed, and excellent processing suitability was obtained.

On the other hand, as in Comparative Examples 1 to 3, when the hydroxyl value of the hydrophilic polymer contained in the fine fibrous cellulose-containing layer A on the polycarbonate plate side, which was a core resin plate, was larger than the hydroxyl value of the hydrophilic polymer contained in the fine fibrous cellulose-containing layer B on the polycarbonate film side, which was a resin film, the adhesive strength was poor and the processing suitability was also poor.

Furthermore, as in Comparative Examples 4 and 5, when the fine fibrous cellulose-containing layer containing hydroxypropyl methylcellulose in which the hydroxyl value of the hydrophilic polymer was relatively low was used as a single layer, the sheet strength was excellent, and the optical properties were excellent, but sufficient adhesive strength could not be obtained, and the processing suitability was also poor.

As in Comparative Examples 6 and 7, when the fine fibrous cellulose-containing layer containing polyvinyl alcohol in which the hydroxyl value of the hydrophilic polymer was relatively high was used as a single layer, the adhesive strength was excellent and the processing suitability was exhibited, but the sheet strength was poor and the optical characteristics were also poor.

As in Comparative Examples 8 and 9, when a single-layer fine fibrous cellulose-containing layer containing, as hydrophilic polymers, hydroxypropyl methylcellulose having a relatively low hydroxyl value and polyvinyl alcohol having a relatively high hydroxyl value was used, sufficient adhesive strength was not obtained, and processing suitability was also poor.

## Claims

1. A fine fibrous cellulose-containing sheet comprising:
a fine fibrous cellulose-containing layer (1A) containing a fine fibrous cellulose having a fiber width of 1,000 nm or less and a hydrophilic polymer (1A); and
a fine fibrous cellulose-containing layer (1B) containing a fine fibrous cellulose having a fiber width of 1,000 nm or less and a hydrophilic polymer (1B), wherein
the hydrophilic polymer (1A) and the hydrophilic polymer (1B) have a hydroxyl group, and
provided that a hydroxyl value of the hydrophilic polymer (1A) is defined as OHV_1A (mgKOH/g) and a hydroxyl value of the hydrophilic polymer (1B) is defined as OHV_1B (mgKOH/g), the following expression (I) is satisfied:$OHV_ 1 A < OHV_ 1 B$ (I).

2. The fine fibrous cellulose-containing sheet according to claim 1, wherein the hydrophilic polymer (1A) is a nonionic water-soluble cellulose ether.

3. The fine fibrous cellulose-containing sheet according to claim 2, wherein the hydrophilic polymer (1A) has at least one functional group selected from the group consisting of an alkoxy group and a hydroxyalkoxy group.

4. The fine fibrous cellulose-containing sheet according to claim 1, wherein the hydrophilic polymer (1B) is polyvinyl alcohol having a degree of saponification of 80 or more or a modified product thereof.

5. The fine fibrous cellulose-containing sheet according to claim 1, wherein the following expression (II) is satisfied:$1200 mgKOH / g \geq OHV_ 1 B - OHV_ 1 A \geq 450 mgKOH / g$ (II).

6. The fine fibrous cellulose-containing sheet according to claim 1, wherein the fine fibrous cellulose has an anionic group.

7. The fine fibrous cellulose-containing sheet according to claim 6, wherein the anionic group of the fine fibrous cellulose is a phosphorus oxoacid group or a functional group derived from a phosphorus oxoacid group.

8. The fine fibrous cellulose-containing sheet according to claim 6, wherein a content of the anionic group in the fine fibrous cellulose is less than 0.5 mmol/g.

9. The fine fibrous cellulose-containing sheet according to claim 1, wherein a ratio of a thickness of the fine fibrous cellulose-containing layer (1A) to a thickness of the fine fibrous cellulose-containing layer (1B) (fine fibrous cellulose-containing layer (1A) : fine fibrous cellulose-containing layer (1B)) is more than 5 : 5 and 9 : 1 or less.

10. The fine fibrous cellulose-containing sheet according to claim 1, wherein a total thickness of the fine fibrous cellulose-containing layer (1A) and the fine fibrous cellulose-containing layer (1B) is 20 µm or more and 300 µm or less.

11. A laminated sheet comprising:
the fine fibrous cellulose-containing sheet according to any one of claims 1 to 10;
an adhesive layer (1A) on a surface of the fine fibrous cellulose-containing layer (1A) of the fine fibrous cellulose-containing sheet opposite to a surface having the fine fibrous cellulose-containing layer (1B); and
an adhesive layer (1B) on a surface of the fine fibrous cellulose-containing layer (1B) opposite to a surface having the fine fibrous cellulose-containing layer (1A).

12. The laminated sheet according to claim 11, wherein the adhesive layer (1A) and the adhesive layer (1B) contain at least one selected from the group consisting of a polycarbonate-based resin, an acrylic resin, and a polyester-based resin.

13. The laminated sheet according to claim 11, wherein the adhesive layer (1A) and the adhesive layer (1B) are formed of an adhesive composition containing an isocyanate compound.

14. The laminated sheet according to claim 11, wherein the laminated sheet has a resin film (1) on a surface of the adhesive layer (1B) of the laminated sheet opposite to a surface having the fine fibrous cellulose-containing layer (1B).

15. The laminated sheet according to claim 14, wherein the resin film (1) has a thickness of 30 µm or more and 500 µm or less.

16. A laminate further comprising a core resin plate on a surface of the adhesive layer (1A) of the laminated sheet according to claim 14 opposite to a surface having the fine fibrous cellulose-containing layer (1A).

17. The laminate according to claim 16, wherein the core resin plate has a thickness of 500 µm or more and 4,500 µm or less.

18. The laminate according to claim 16, wherein the core resin plate contains at least one selected from the group consisting of a polycarbonate resin and an acrylic resin.

19. The laminate according to claim 16, wherein
the laminate has, on a surface of the core resin plate opposite to a surface having the adhesive layer (1A), an adhesive layer (2A), a fine fibrous cellulose-containing layer (2A) containing a fine fibrous cellulose having a fiber width of 1,000 nm or less and a hydrophilic polymer (2A), a fine fibrous cellulose-containing layer (2B) containing a fine fibrous cellulose having a fiber width of 1,000 nm or less and a hydrophilic polymer (2B), an adhesive layer (2B), and a resin film (2) in this order from the core resin plate,
the hydrophilic polymer (2A) and the hydrophilic polymer (2B) have a hydroxyl group, and
provided that a hydroxyl value of the hydrophilic polymer (2A) is defined as OHV_2A (mgKOH/g) and a hydroxyl value of the hydrophilic polymer (2B) is defined as OHV_2B (mgKOH/g), the following expression (I') is satisfied: $OHV_ 2 A < OHV_ 2 B$ (I').

20. The laminate according to claim 16, wherein a haze of the laminate is 2.0% or less.

21. The laminate according to claim 16, wherein a total light transmittance of the laminate is 85% or more.

22. The laminate according to claim 16, wherein a yellowness index (YI value) of the laminate is 2.50 or less.
